(19) Europäisches Patentamt / European Patent Office / Office européen des brevets

(11) **EP 4 487 940 A1**

(12) **EUROPEAN PATENT APPLICATION**
published in accordance with Art. 153(4) EPC

(43) Date of publication:
**08.01.2025 Bulletin 2025/02**

(21) Application number: **23780998.3**

(22) Date of filing: **30.03.2023**

(51) International Patent Classification (IPC):
**B01D 61/44** (2006.01)   **B01D 61/46** (2006.01)
**C01D 15/02** (2006.01)   **C22B 26/12** (2006.01)
**C22B 3/02** (2006.01)   **C22B 3/20** (2006.01)
**C25B 13/07** (2021.01)   **C25B 9/21** (2021.01)
**B09B 3/70** (2022.01)   **C25B 1/46** (2006.01)
**B09B 101/16** (2022.01)   **C02F 1/469** (2023.01)

(52) Cooperative Patent Classification (CPC):
**B01D 61/44; B01D 61/46; B09B 3/70; C01D 15/02;
C02F 1/469; C22B 3/02; C22B 3/20; C22B 26/12;
C25B 1/46; C25B 9/21; C25B 13/07;**
B09B 2101/16; Y02W 30/84

(86) International application number:
**PCT/JP2023/013395**

(87) International publication number:
**WO 2023/190990 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022061425
07.10.2022 JP 2022162823**

(71) Applicant: **HIROSAKI UNIVERSITY
Hirosaki-shi, Aomori 036-8560 (JP)**

(72) Inventors:
• SASAKI, Kazuya
  **Hirosaki-shi, Aomori 036-8560 (JP)**
• SHINMURA, Kiyoto
  **Hirosaki-shi, Aomori 036-8560 (JP)**

(74) Representative: **Simmons & Simmons LLP
(Munich)
Lehel Carré
Gewürzmühlstraße 11
80538 Munich (DE)**

(54) **LITHIUM RECOVERY DEVICE AND LITHIUM RECOVERY METHOD**

(57)    In this lithium recovery device 1, a processing tank 7 is provided that is partitioned into an acid recovery tank 11, a lithium supply tank 12, an alkali recovery tank 13, and a lithium recovery tank 14, in that order. The lithium recovery tank 14 and the alkali recovery tank 13 are partitioned by a lithium-ion-conducting electrolyte film 2 and the tanks 11, 12, 13 are partitioned by ion exchange films 31, 33. Power sources 51, 52 are respectively provided between electrodes 45, 46 provided within the tanks 13, 14 and between electrodes 41, 44 provided within the tanks 13, 14, the power sources being connected with the lithium recovery tank 14 side as the negative side. The power sources selectively cause $Li^+$ to migrate, from an aqueous solution S0 within the lithium supply tank 12 that contains $Li^+$ and other metal ions $M^{n+}$ along with anions such as $SO_4^{2-}$, to an aqueous solution S3 within the lithium recovery tank 14.

FIG. 2

EP 4 487 940 A1

**Description**

**TECHNICAL FIELD**

The present invention relates to a lithium recovery device and a lithium recovery method for selectively recovering lithium ions from an aqueous solution.

**BACKGROUND ART**

Lithium (Li) is a resource in high demand as a raw material for lithium-ion secondary batteries, fuels for nuclear fusion reactors, and so on. There is a demand for a lithium extraction method capable of stably supplying lithium with lower cost. A stable Li source is seawater or the like in which Li is dissolved in the form of cations $Li^+$. In addition, since a positive electrode of a lithium-ion secondary battery mainly contains Li in the form of lithium cobalt oxide ($LiCoO_2$) or the like, a low-cost technique for recovering Li from batteries discarded due to the end of the battery lives or the like has been expected. As the technique for recovering Li from seawater, an adsorption technique has been conventionally applied. However, as a method superior in selectivity, a recovery through electrodialysis using a lithium ion-conductive electrolyte membrane has been developed (for example, Patent Literatures 1 to 5 and Non Patent Literature 1).

In reference to FIG. 18, a Li recovery method through electrodialysis described in Patent Literature 1 will be described. A lithium recovery device 101 has a structure in which a processing tank 107 is partitioned into a supply chamber 111 and a recovery chamber 112 by a lithium ion-conducting electrolyte membrane (hereinafter referred to as the electrolyte membrane) 2, and a power supply 151 is connected between an electrode 141 in the supply chamber 111 and an electrode 142 in the recovery chamber 112 with the electrode 141 set as a positive electrode. A Li supply aqueous solution S0 such as seawater as a Li source is put into the supply chamber 111, while a Li recovery aqueous solution S3 such as pure water is put into the recovery chamber 112.

When a voltage is applied by the power supply 151, a reaction of Formula (1) below occurs near the electrode 141 and a reaction of Formula (2) below occurs on the surface of the electrolyte membrane 2 in the Li supply aqueous solution S0 in the supply chamber 111. Meanwhile, in the Li recovery aqueous solution S3 in recovery chamber 112, a reaction of Formula (3) below occurs on the surface of the electrolyte membrane 2 and a reaction of Formula (4) occurs near the electrode 142. In these formulas, $Li^+$ (electrolyte) denotes lithium ions $Li^+$ contained in the electrolyte membrane 2 (electrolyte). Formula (2) below expresses a reaction in which $Li^+$ in the solution migrates into the electrolyte membrane 2. Formula (3) below expresses a reaction in which $Li^+$ in the electrolyte membrane 2 migrates into the solution. As a result, due to an electrochemical potential difference of $Li^+$ contained in the Li supply aqueous solution S0, the electrolyte membrane 2, and the Li recovery aqueous solution S3, $Li^+$ migrates from the Li supply aqueous solution S0 through the electrolyte membrane 2 to the Li recovery aqueous solution S3. The electrolyte membrane 2 has lattice defect sites small in size, and therefore does not allow metal ions $M^{n+}$ other than $Li^+$ contained in the Li supply aqueous solution S0, such as $Na^+$ and $Ca^{2+}$, which have larger diameters than that of $Li^+$, to pass through the electrolyte membrane 2. Accordingly, $Li^+$ selectively migrates from the Li supply aqueous solution S0 to the Li recovery aqueous solution S3, and a $Li^+$ aqueous solution (lithium hydroxide aqueous solution) is obtained in the recovery chamber 112.

[Chem. 1]

$$2OH^- \rightarrow H_2O + \frac{1}{2}O_2 \uparrow + 2e^- \cdots (1)$$

$$Li^+ \rightarrow Li^+(electrolyte) \qquad \cdots (2)$$

$$Li^+(electrolyte) \rightarrow Li^+ \qquad \cdots (3)$$

$$2H_2O + 2e^- \rightarrow 2OH^- + H_2 \uparrow \cdots (4)$$

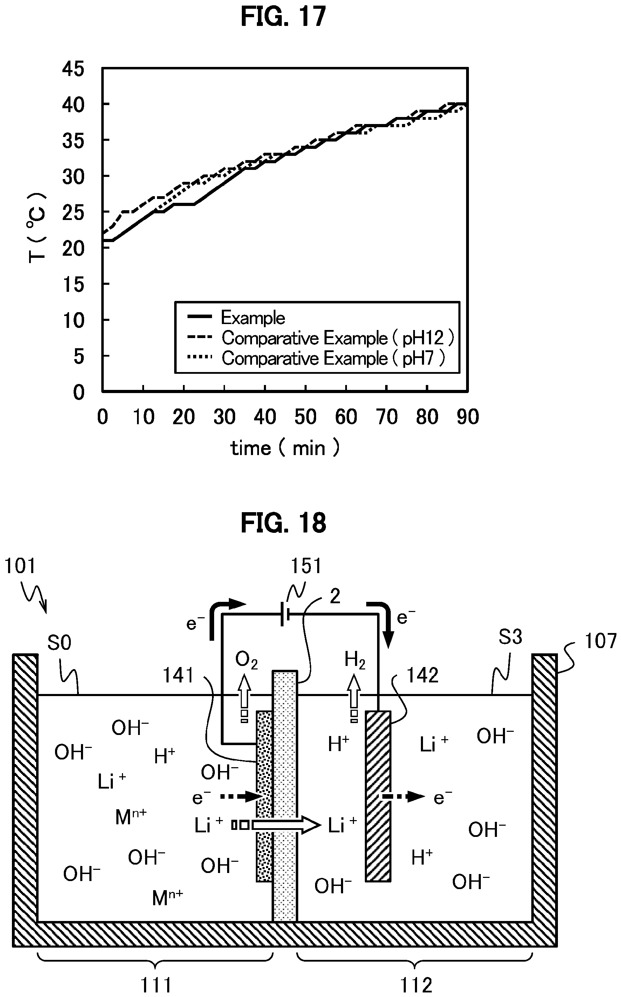

In the recovery through electrodialysis, the larger the electron $e^-$ migration amount per hour from the Li supply aqueous solution S0 to the electrode 141 and from the electrode 142 to the Li recovery aqueous solution S3, the faster the reactions of Formulas (1) and (4) and the larger the $Li^+$ migration amount per hour ($Li^+$ mobility). In order to form an electric field in a thickness direction within the electrolyte membrane 2, the electrodes 141 and 142 are preferably provided in contact with the electrolyte membrane 2 (Patent Literature 1). In this case, the electrodes 141 and 142 have porous structures such as mesh structures so as to allow the aqueous solutions S0 and S3 to come into contact with the electrolyte membrane 2. However, when the potential difference between both surfaces of the electrolyte membrane 2 exceeds a certain value as a result of increasing the voltage of the power supply 151 in an attempt to increase the electron $e^-$ migration amount per hour, the electrolyte membrane 2 exhibits electron conductivity and allows some of the electrons e⁻ supplied to the Li recovery aqueous solution S3 from the negative electrode of the power supply 151 via the electrode 142 to migrate to the Li supply aqueous solution S0 via the electrolyte membrane 2. As a result, the $Li^+$ mobility does not increase proportionally to an increase in the applied voltage. To address this, to prevent the electrolyte membrane from developing electron conductivity, the present inventors have developed a technique for suppressing a potential difference between both surfaces of the electrolyte membrane 2 by forming a circuit with the electrode 142 spaced apart from one of the surfaces of the electrolyte membrane 2 as shown in FIG. 18, without applying a voltage for electrodialysis from both surfaces of the electrolyte membrane (Patent Literature 3). In the lithium recovery device 101 in FIG. 18, the electrode 141 or the electrode 142 is arranged away from the electrolyte membrane 2. With this structure, even if the voltage of the power supply 151 is increased to a certain level, the potential difference between both surfaces of the electrolyte membrane 2 does not become very large. Therefore, the electrolyte membrane 2 is less likely to develop electron conductivity, and the $Li^+$ mobility can be enhanced.

Meanwhile, the present inventors have found that, in a structure where a third electrode is further provided away from the electrolyte membrane in the recovery chamber, when a voltage for electrodialysis is applied to porous structure electrodes provided in contact with both surfaces of the electrolyte membrane and a voltage at an appropriate level is applied between the third electrode and the porous structure electrode on the recovery chamber side, the electrolyte membrane does not develop electron conductivity even if the voltage between both surfaces thereof is high, and thus have developed a technique capable of further enhancing the $Li^+$ mobility by increasing the voltage for electrodialysis (Patent Literature 4).

In addition, in the recovery method through electrodialysis, the $Li^+$ mobility is rate-limited by the diffusion of $Li^+$ to the surface of the electrolyte membrane. Therefore, if the Li concentration in the aqueous solution in contact with the $Li^+$ supply side surface of the electrolyte membrane is low, it is difficult to increase the $Li^+$ mobility proportionally to the applied voltage. For this reason, when seawater or the like with a low $Li^+$ concentration is used as the Li source, even the techniques described in Patent Literatures 3 and 4 result in the low $Li^+$ mobility relative to the applied voltage. To address this, the present inventors have developed a technique for suppressing a decrease in the $Li^+$ mobility by providing a porous structure electrode in contact with an electrolyte membrane and an electrode away from the electrolyte membrane in a supply chamber, and applying a voltage for electrodialysis between the porous structure electrode and an electrode provided in a recovery chamber while applying a voltage at an appropriate level between the two electrodes in the supply chamber, thereby distributing $Li^+$ locally near the electrolyte membrane in the Li source in the supply chamber (Patent Literature 5).

Meanwhile, a minimum voltage (theoretical voltage) necessary to move $Li^+$ in an electrolyte membrane through electrodialysis becomes higher, as the pH of an aqueous solution on the Li supply side becomes lower than that of an aqueous solution (lithium hydroxide aqueous solution) on the Li recovery side across the electrolyte membrane. Therefore, the lower the pH of the aqueous solution on the Li supply side, the lower the $Li^+$ mobility relative to the applied voltage. In a case where Li is recovered from a waste lithium-ion secondary battery (waste battery) or the like through electrodialysis, a dissolution solution in which the waste battery crushed and roasted is dissolved in a strong acid such as sulfuric acid ($H_2SO_4$) can be prepared as a Li supply aqueous solution as in the case of the method of recovering another metal such as cobalt (Co) or nickel (Ni). However, the dissolution solution containing such strong acid has a low pH, and accordingly the $Li^+$ mobility in the electrolyte membrane is low relative to the applied voltage. In addition, the electrolyte membrane has a short service lifetime because it is exposed to the strong acid. Also in the case of recovering Li from seawater or the like, as the recovery progresses, the Li recovery aqueous solution S3 becomes the highly-concentrated lithium hydroxide aqueous solution, and its pH becomes too high for seawater, which is weakly alkaline. To address this, a technique has been disclosed in which the dissolution solution is adjusted to a high pH by adding sodium hydroxide (NaOH) or the like and then is provided for Li recovery (electrodialysis) (Patent Literature 2).

**CITATION LIST**

**Patent Literature**

Patent Literature 1: JP6233877
Patent Literature 2: JP2019-81953
Patent Literature 3: JP2019-141807
Patent Literature 4: WO2022/239864
Patent Literature 5: WO2023/027190

Non Patent Literature

Non Patent Literature 1: Kunugi S., Inaguma Y., Itoh M., "Electrochemical recovery and isotope separation of lithium ion employing lithium ion-conductive perovskite-type oxides", Solid State Ionics, Vol. 122, Issues 1-4, pp. 35-39, July 1999

## SUMMARY OF INVENTION

### Technical Problem

According to the technique described in Patent Literature 2, a large amount of NaOH is needed because a pH suitable for Li recovery from the Li supply aqueous solution is 12 to 14. Moreover, during Li recovery (electrodialysis), the Li supply aqueous solution undergoes a drop of the pH because cations $Li^+$ are extracted from the Li-containing aqueous solution, and therefore requires continuous addition of NaOH. In addition, in order to reduce environmental burdens, the highly alkaline aqueous solution after the lithium extraction needs to be neutralized before being discharged, which requires high cost together with the need of NaOH, making it difficult to carry out this technique on an industrial scale.
Moreover, the above dissolution solution of the waste battery contains a large amount of cations of metals such as Co and aluminum (Al) other than Li and also contains, together with these metal ions, a large amount of anions such as sulfate ions ($SO_4^{2-}$), nitrate ions ($NO_3^-$), and chloride ions ($Cl^-$). These anions may be adsorbed onto the surface of the electrolyte membrane, which is positively charged with application of a voltage, and may block the $Li^+$ migration. In addition, after $Li^+$ extraction through electrodialysis, such an aqueous solution drops in the pH and becomes stronger acid as a result of the reaction of Formula (1) for compensating for a charge imbalance in the solution. From the environmental and safety standpoints, the solution requires appropriate treatments such as neutralization not only after Li recovery but also during Li recovery. Furthermore, as the pH drops, metal ions such as Co in the solution generate precipitates, which are suspended in the supply chamber 111 and block the $Li^+$ migration.
The present invention has been made in view of the above-described problems, and has an object to provide a lithium recovery method and a lithium recovery device capable of recovering lithium from a waste lithium ion secondary battery or the like through electrodialysis safely with high productivity and low cost.

### Solution to Problem

As a result of earnest studies, the present inventors have come up with the idea of removing anions such as $SO_4^{2-}$ from a Li-containing aqueous solution as a Li source and then providing the resultant aqueous solution to Li recovery.
Specifically, a lithium recovery device according to the present invention includes: a processing tank partitioned into four or more chambers including one or more acid recovery chambers, a lithium supply chamber, one or more alkali recovery chambers, and a lithium recovery chamber in this order; a lithium ion-conductive electrolyte membrane that partitions the processing tank into the lithium recovery chamber and its neighboring alkali recovery chamber; at least one ion exchange membrane that partitions the processing tank into the alkali recovery chamber and its neighboring alkali recovery chamber or the lithium supply chamber, and that conducts cations including at least lithium ions; at least one ion exchange membrane that partitions the processing tank into the acid recovery chamber and its neighboring acid recovery chamber or the lithium supply chamber and that has anion conductivity; electrodes provided respectively in at least the lithium recovery chamber and the acid recovery chamber located at an end opposite to the lithium recovery chamber in the processing tank; and one or more power supplies each connected between the electrodes with its lithium recovery chamber side set negative. Lithium ions contained in an aqueous solution stored in the lithium supply chamber are migrated to water or an electrolytic liquid stored in the lithium recovery chamber. Each of the ion exchange membranes and the lithium ion-conductive electrolyte membrane is disposed between the electrodes connected to both poles of any one of the power supplies while none of the electrodes is disposed between the above electrodes.
A lithium recovery method according to the present invention is a method including, in a processing tank partitioned into four or more chambers including one or more acid recovery chambers, a lithium supply chamber, one or more alkali recovery chambers, and a lithium recovery chamber in this order, migrating lithium ions contained in an aqueous solution stored in the lithium supply chamber to water or an electrolytic liquid stored in the lithium recovery chamber. In the lithium recovery method according to the present invention, the lithium recovery chamber and its neighboring alkali recovery chamber are partitioned by a lithium ion-conductive electrolyte membrane, the alkali recovery chamber and its neighboring alkali recovery chamber or the lithium supply chamber are partitioned by an ion exchange membrane that conducts cations including at least lithium ions, the acid recovery chamber and its neighboring acid recovery chamber or the lithium supply chamber are partitioned by an ion exchange membrane having anion conductivity, and one or more power supplies connected between electrodes provided in two or more of the acid recovery chambers, the lithium supply chamber, the alkali recovery chambers, and the lithium recovery chamber apply voltages for generating potential differences between both surfaces of the lithium ion-conductive electrolyte membrane and between both surfaces of each of the ion exchange membranes such that the surfaces on a lithium recovery chamber side have lower potentials, thereby migrating the lithium ions contained in the aqueous solution stored in the lithium supply chamber to the water or the electrolytic liquid stored in the lithium recovery chamber via water or an aqueous solution stored in the alkali recovery chambers.

**Advantageous Effects of Invention**

According to the lithium recovery device and the lithium recovery method in the present invention, it is possible to safely recover lithium from not only seawater but also a waste battery with low cost and high productivity.

**BRIEF DESCRIPTION OF DRAWINGS**

FIG. 1 is a schematic diagram for explaining a structure of a lithium recovery device according to a first embodiment of the present invention.
FIG. 2 is a schematic diagram of the lithium recovery device shown in FIG. 1 for explaining a lithium recovery method according to the first embodiment of the present invention.
FIG. 3 is a schematic diagram for explaining a structure of a lithium recovery device and a lithium recovery method according to a first modification of the first embodiment of the present invention.
FIG. 4 is a schematic diagram of the lithium recovery device shown in FIG. 2 for explaining the lithium recovery method according to the first embodiment of the present invention.
FIG. 5 is a schematic diagram for explaining a structure of a lithium recovery device according to a second modification of the first embodiment of the present invention.
FIG. 6 is a schematic diagram for explaining a structure of a lithium recovery device according to a third modification of the first embodiment of the present invention.
FIG. 7 is a schematic diagram for explaining a structure of a lithium recovery device according to a second embodiment of the present invention.
FIG. 8 is a schematic diagram for explaining a structure of a lithium recovery device according to a third embodiment of the present invention.
FIG. 9 is a schematic diagram of the lithium recovery device shown in FIG. 8 for explaining a lithium recovery method according to the third embodiment of the present invention.
FIG. 10 is a schematic diagram for explaining a structure of a lithium recovery device according to a fourth embodiment of the present invention.
FIG. 11 is a schematic diagram of the lithium recovery device shown in FIG. 10 for explaining a lithium recovery method according to the fourth embodiment of the present invention.
FIG. 12 is a schematic diagram for explaining a structure of a lithium recovery device and a lithium recovery method according to a modification of the fourth embodiment of the present invention.
FIG. 13 is a graph showing transitions of cation migration amounts per hour in terms of lithium ions using ion exchange membranes in Example of the present invention.
FIG. 14 is a graph showing transitions of lithium recovery amounts per hour in Example of the present invention.
FIG. 15 is a graph showing a transition of a lithium recovery amount per hour in Comparative Example.
FIG. 16 is a graph showing transitions of lithium recovery amounts per hour in Example of the present invention and Comparative Example.
FIG. 17 is a graph showing transitions of the temperature in Example of the present invention and Comparative Example.
FIG. 18 is a schematic diagram of a lithium recovery device for explaining a conventional lithium recovery method through electrodialysis.

**DESCRIPTION OF EMBODIMENTS**

Embodiments for carrying out a lithium recovery device and a lithium recovery method according to the present invention will be described with reference to the drawings. In the drawings, the sizes and the like of specific components may be exaggerated and shapes may be simplified to clarify the description. In the description of each of the embodiments, the same components as those in the previous embodiment will be denoted by the same reference signs, and descriptions thereof will be omitted as appropriate.

[First Embodiment]

(Lithium Recovery Device)

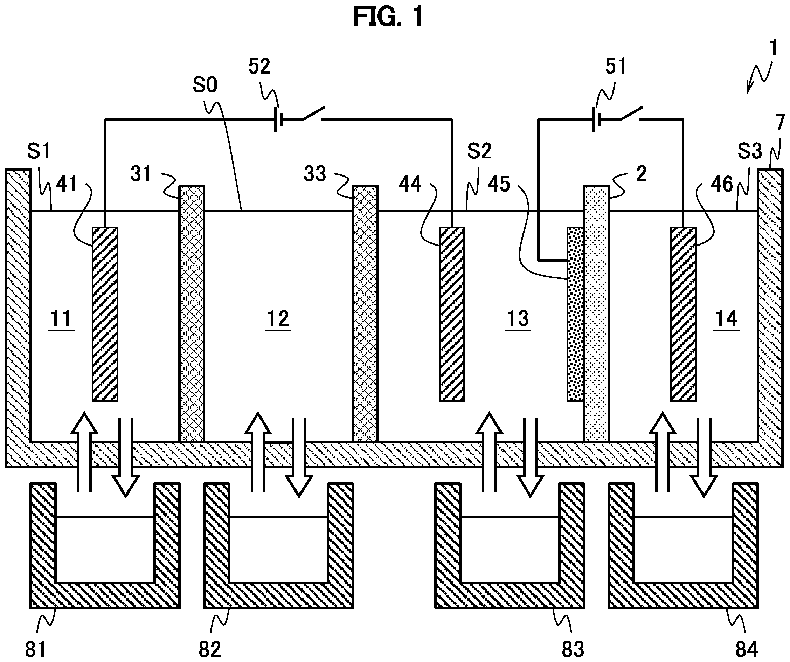

As shown in FIG. 1, a lithium recovery device 1 according to a first embodiment of the present invention includes a processing tank 7, ion exchange membranes 31 and 33 and an electrolyte membrane (lithium ion-conductive electrolyte membrane) 2 that partition the processing tank 7 into four chambers 11, 12, 13, and 14 in this order, electrodes 45 and 46 provided in contact with or facing the electrolyte membrane 2 in the respective chambers 13 and 14 partitioned by the electrolyte membrane 2, an electrode 41 provided in the chamber 11, an electrode 44 provided away from the electrode 45 in the chamber 13 , a $Li^+$ transfer power supply (first power supply) 51 connected between the electrodes 45 and 46, an ion transfer power supply (power supply) 52 connected between the electrodes 41 and 44, and circulation devices (circulation tanks and circulation units) 81, 82, 83, and 84 provided for the respective chambers 11, 12, 13, and 14. The chamber 11 is an acid recovery chamber and stores an acid recovery aqueous solution S1. The chamber 12 is a supply chamber (lithium supply chamber) and stores a Li supply aqueous solution S0. The chamber 13 is an alkali recovery chamber and stores an alkali recovery aqueous solution S2. The chamber 14 is a Li recovery chamber (lithium recovery chamber) and stores a Li recovery aqueous solution S3. Each of the power supplies 51 and 52 is connected with its Li recovery chamber 14 side set negative.

The Li supply aqueous solution S0 is a Li source and is an aqueous solution containing lithium ions ($Li^+$) and other metal ions $M^{n+}$. An example of such an aqueous solution is a dissolution solution in which a used lithium-ion secondary battery or the like crushed and roasted is dissolved in a strong acid such as a sulfuric acid ($H_2SO_4$). Instead, seawater, waste brine obtained by extracting salt from seawater, or groundwater such as hot spring water may be used as the Li supply aqueous solution S0. When the Li supply aqueous solution S0 is a dissolution solution of a lithium-ion secondary battery, the metal ions $M^{n+}$ other than $Li^+$ are $CO^{2+}$, $Fe^{2+}$, $Cu^{2+}$, $Al^{3+}$, $Ni^{2+}$, and the like and the Li supply aqueous solution S0 also contains anions such as sulfate ions ($SO_4^{2-}$) or further chloride ions ($Cl^-$), nitrate ions ($NO_3^-$), and fluoride ions ($F^-$). When the Li supply aqueous solution S0 is seawater, the metal ions $M^{n+}$ are $Na^+$, $K^+$, $Mg^{2+}$, $Ca^{2+}$, and the like.

The acid recovery aqueous solution S1 is a solution for storing anions other than hydroxide ions ($OH^-$) contained in the Li supply aqueous solution S0, particularly $SO_4^{2-}$, $NO_3^-$, $Cl^-$, $F^-$, and the like, which make the aqueous solution strongly acid. The acid recovery aqueous solution S1 is, for example, pure water at the start of operation of the lithium recovery device 1. Alternatively, in order to facilitate smooth migration of anions to the acid recovery aqueous solution S1 immediately after the start of operation, the acid recovery aqueous solution S1 may be an acid aqueous solution in which anions such as $SO_4^{2-}$ are dissolved so that the acid recovery aqueous solution S1 has a certain high level of electron conductivity at the start of operation. The alkali recovery aqueous solution S2 is a solution for storing cations including $Li^+$ recovered from the Li supply aqueous solution S0 and serves as a secondary Li source in the lithium recovery device 1. The alkali recovery aqueous solution S2 is preferably an aqueous solution not containing anions other than $OH^-$, particularly halide ions, and is, for example, pure water at the start of operation of the lithium recovery device 1. Alternatively, in order to facilitate smooth migration of cations to the alkali recovery aqueous solution S2 immediately after the start of operation, the alkali recovery aqueous solution S2 may be an aqueous solution in which water-soluble metal ions, $Li^+$ and $Na^+$, are dissolved so that the alkali recovery aqueous solution S2 has a certain high level of electron conductivity at the start of operation. In sum, the alkali recovery aqueous solution S2 is a lithium hydroxide (LiOH) aqueous solution or a sodium hydroxide (NaOH) aqueous solution, and is preferably a LiOH aqueous solution.

The Li recovery aqueous solution S3 is a solution for storing $Li^+$ recovered from the Li supply aqueous solution S0. In order to selectively obtain only Li from metals, the Li recovery aqueous solution S3 is preferably an aqueous solution not containing metal ions (such as $Na^+$) other than $Li^+$, more preferably an aqueous solution not containing anions other than $OH^-$, particularly, halide ions, and is, for example, pure water at the start of operation of the lithium recovery device 1. Alternatively, in order to facilitate smooth migration of $Li^+$ immediately after the start of operation, the Li recovery aqueous solution S3 is preferably an aqueous solution containing $Li^+$ (lithium hydroxide (LiOH) aqueous solution) at the start of operation of the lithium recovery device 1.

The electrolyte membrane 2 is an electrolyte that has a lithium ion conductivity and does not conduct metal ions $M^{n+}$ other than $Li^+$ contained in the Li supply aqueous solution S0, and preferably does not conduct electrons $e^-$. More preferably, the electrolyte membrane 2 is a ceramic electrolyte having these properties. A specific example thereof is a lithium lanthanum titanium oxide ($La_{2/3-x}Li_{3x}TiO_3$, also called LLTO) or the like. Such electrolyte membrane 2 has lattice defects at a certain percentage and does not conduct the metal ions $M^{n+}$ other than $Li^+$ because the size of these lattice detect sites is small and the diameters of the metal ions $M^{n+}$ are larger than that of $Li^+$.

The ion exchange membrane 31 partitioning the processing tank 7 into the acid recovery chamber 11 and the supply chamber 12 conducts at least one kind of anions contained in the Li supply aqueous solution S0, and the at least one kind of anions preferably includes an anion other than hydroxide ions ($OH^-$). In particular, in the case where the Li supply aqueous solution S0 contains $SO_4^{2-}$ $NO_3^-$, $Cl^-$, $F^-$, and the like that make an aqueous solution strongly acid, the ion exchange membrane 31 preferably conducts these anions. This prevents the Li supply aqueous solution S0 in the supply chamber 12 from dropping in pH along with the operation of the lithium recovery device 1, and also enables strong acids such as a sulfuric acid to be recovered in the acid recovery chamber 11 as the acid recovery aqueous solution S1. As the ion exchange membrane 31, an anion exchange membrane transmitting anions and blocking cations may be used. A known anion exchange membrane can be used, and examples thereof include SELEMION (registered trademark) AMV (manufactured by AGC Engineering Co., Ltd.) and NEOSEPTA ASE (manufactured by Astom Corporation). As the ion exchange membrane 31, a membrane endurable to the pH of the Li supply aqueous solution S0 is selected.

The ion exchange membrane 33 partitioning the processing tank 7 into the alkali recovery chamber 13 and the supply chamber 12 conducts cations including at least $Li^+$. This prevents anions such as $SO_4^{2-}$ from entering the alkali recovery aqueous solution S2 in the alkali recovery chamber 13. As the ion exchange membrane 33, it is possible to use a cation exchange membrane transmitting cations and blocking anions, a monovalent cation selectively permeable ion exchange membrane transmitting only monovalent cations such as $Li^+$, $K^+$, and $Na^+$, or a bipolar monovalent ion selectively permeable ion exchange membrane transmitting monovalent ions. As these ion exchange membranes, any known membranes may be used, and examples thereof include cation exchange membranes such as SELEMION (registered trademark) CMV, CMVN, and CMTE (all manufactured by AGC Engineering Co., Ltd.) and NEOSEPTA CSE (manufactured by Astom Corporation), monovalent cation selectively permeable ion exchange membranes such as SELEMION (registered trademark) CSO (manufactured by AGC Engineering Co., Ltd.) and CXP-S (manufactured by Astom Corporation), and bipolar monovalent ion selectively permeable ion exchange membranes such as NEOSEPTA CIMS (manufactured by Astom Corporation). The ion exchange membrane 33 is preferably one having sufficient resistance to strong alkalis since it is in contact with the alkali recovery aqueous solution S2 having a high pH.

The electrodes 41, 44, 45, and 46 are electrodes for applying a voltage between both surfaces of each of the ion exchange membrane 31, the ion exchange membrane 33, and the electrolyte membrane 2 such that the voltage can generate a potential difference in which the Li recovery chamber 14 side has a lower potential. To this end, the lithium recovery device 1 at least includes the electrodes 41 and 46 in the respective chambers 11 and 14 at both ends of the processing tank 7 and further includes the electrodes 44 and 45 in the alkali recovery chamber 13. The electrode 41 and the electrode 44 are connected to the ion transfer power supply 52. The electrode 41 is provided in the acid recovery chamber 11 and the electrode 44 is provided in the alkali recovery chamber 13 so as to collectively sandwich the two ion exchange membranes 31 and 33 in between. The electrode (second electrode) 45 and the electrode (first electrode) 46 are connected to the $Li^+$ transfer power supply 51. The electrode 45 is provided in contact with or facing the surface of the electrolyte membrane 2 on the supply chamber 12 side and the electrode 46 is provided in contact with or facing the surface of the electrolyte membrane 2 on the Li recovery chamber 14 side so as to sandwich the electrolyte membrane 2 in between and function as a pair to apply the voltage between both surfaces of the electrolyte membrane 2. In sum, the structure is such that the ion exchange membranes 31 and 33 or the electrolyte membrane 2 is arranged between the electrodes connected to both poles of any one of the power supplies (the ion transfer power supply 52 or the $Li^+$ transfer power supply 51). It is preferable to arrange the electrode 41 and the electrode 44 in parallel to each other and arrange the electrode 45 and the electrode 46 in parallel to each other.

The electrode 41, the electrodes 44 and 45, and the electrode 46 are made of electrode materials that are stable in the acid recovery aqueous solution S1, the alkali recovery aqueous solution S2, and the Li recovery aqueous solution S3, respectively, even under voltage application and after the end of operation of the lithium recovery device 1 (after Li recovery). For example, the acid recovery aqueous solution S1 becomes an aqueous solution of sulfuric acid ($H_2SO_4$), hydrochloric acid (HCl), hydrofluoric acid (HF), nitric acid ($HNO_3$), or the like due to the anions other than hydroxide ions ($OH^-$) contained in the Li supply aqueous solution S0. The alkali recovery aqueous solution S2 becomes a sodium hydroxide (NaOH) aqueous solution or a lithium hydroxide (LiOH) aqueous solution due to $Li^+$ and the other metal ions $M^{n+}$ contained in the Li supply aqueous solution S0. The Li recovery aqueous solution S3 becomes a lithium hydroxide (LiOH) aqueous solution.

As an example shown in FIG. 1, the electrodes 41 and 44 can be arranged away from the ion exchange membranes 31 and 33, so that the entire surfaces of the ion exchange membranes 31 and 33 can come into contact with the aqueous solutions S1 and S2. The electrodes 41 and 44 each preferably have a shape such as a mesh shape to allow an aqueous solution to pass therethrough so that the aqueous solution S1 or S2 in contact with the surface of the ion exchange membrane 31 or 33 can be continuously replaced in rotation in the chamber 11 or 13. The electrode 44 is arranged away from the electrode 45 provided in the same alkali recovery chamber 13. For this reason, the alkali recovery chamber 13, in other words, the distance between the ion exchange membrane 33 and the electrolyte membrane 2 is designed to have a sufficient length in a partitioning direction of the processing tank 7 (the right-left direction in FIG. 1).

It is preferable that one or both of the electrodes 45 and 46 have porous structures and be in contact with the electrolyte membrane 2, and it is more preferable that one of the electrodes 45 and 46 be in contact with the electrolyte membrane 2 while the other one be away from the electrolyte membrane 2. More preferably, as shown in FIG. 1, the electrode 45 is provided in contact with the surface of the electrolyte membrane 2 on the supply chamber 12 side in the alkali recovery chamber 13, while the electrode 46 is provided away from the electrolyte membrane 2 in the Li recovery chamber 14. Furthermore, the electrode 46 is preferably arranged in parallel to the electrolyte membrane 2.

The electrode 45 is provided in contact with the electrolyte membrane 2 and preferably has a porous structure such as a mesh structure so as to apply a voltage to a wide range of the electrolyte membrane 2 and to allow the alkali recovery aqueous solution S2 to come into contact with a sufficient area of the surface of the electrolyte membrane 2. The electrode 45 is made of a material that has electron conductivity and preferably has catalytic activity for the reactions of Formulas (1) and (2) below, and is preferably made of a material that can be easily processed into the aforementioned shape. As such an electrode material for the electrode 45, for example, platinum (Pt) is preferable. The electrode 46 is arranged in the Li recovery chamber 14 out of contact with the electrolyte membrane 2, but preferably at a short distance from the electrolyte membrane 2, and is preferably arranged in parallel to the electrolyte membrane 2. The electrode 46 preferably has a shape such as a mesh shape to allow an aqueous solution to pass therethrough so that the electrode 46 can have a large contact area with the Li recovery aqueous solution S3 and the Li recovery aqueous solution S3 in contact with the surface of the electrolyte membrane 2 can be continuously replaced in rotation in the Li recovery chamber 14. The electrode 46 is made of a material that has electron conductivity and preferably has catalytic activity for the reaction of Formula (4) below, and is preferably made of a material that can be easily processed into the aforementioned shape. As such an electrode material for the electrode 46, for example, platinum (Pt) is preferable. Instead, carbon (C), copper (Cu), nickel (Ni), or stainless steel, which is stable at a potential lower than the potential at which the reaction of Formula (4) below occurs, may be used. It is more preferable to use any of these materials whose surfaces carry fine Pt particles that function as a catalyst.

[Chem. 2]

$$2OH^- \rightarrow H_2O + \frac{1}{2}O_2 \uparrow + 2e^- \quad \cdots (1)$$

$$Li^+ \rightarrow Li^+(electrolyte) \qquad \cdots (2)$$

$$2H_2O + 2e^- \rightarrow 2OH^- + H_2 \uparrow \cdots (4)$$

The $Li^+$ transfer power supply (first power supply) 51 and the ion transfer power supply 52 are direct-current power supply devices. The $Li^+$ transfer power supply 51 is connected between the electrodes 45 and 46 and the ion transfer power supply 52 is connected between the electrodes 41 and 44 with their respective Li recovery chamber 14 sides set negative. To be more specific, the $Li^+$ transfer power supply 51 has its positive electrode connected to the electrode 45 and its negative electrode connected to the electrode 46. The ion transfer power supply 52 has its positive electrode connected to the electrode 41 and its negative electrode connected to the electrode 44. The $Li^+$ transfer power supply 51 applies a voltage V1 between both surfaces of the electrolyte membrane 2 to generate a potential gradient for the electrolyte membrane 2 to conduct $Li^+$. The ion transfer power supply 52 applies a voltage V2 to the two ion exchange membranes 31 and 33 collectively to form a potential difference between both surfaces of each of the ion exchange membranes 31 and 33 with its Li recovery chamber 14 side having a lower potential, thereby migrating anions contained in the Li supply aqueous solution S0 to the acid recovery aqueous solution S1 and migrating metal ions contained in the Li supply aqueous solution S0 to the alkali recovery aqueous solution S2. In addition, in the case where a constant current supply is applied to each of the $Li^+$ transfer power supply 51 and the ion transfer power supply 52, the migration amount per hour can be maintained constant in each of the $Li^+$ movement in the electrolyte membrane 2 and the anion and cation migrations through the ion exchange membranes 31 and 33.

The processing tank 7 is made of a material that may not corrode or deteriorate even when it comes into contact with the Li supply aqueous solution S0, and the aqueous solutions S1, S2, and S3 including these solutions after the end of operation of the lithium recovery device 1 (after Li recovery). For example, the Li recovery aqueous solution S3 becomes a lithium hydroxide (LiOH) aqueous solution. The processing tank 7 only has to have a capacity sufficient to achieve the necessary processing performance, and is not particularly limited in shape and the like.

The circulation device 81 is a device to circulate the acid recovery aqueous solution S1 so as to continuously replace the acid recovery aqueous solution S1 in the acid recovery chamber 11 during operation and includes a circulation tank provided outside the processing tank 7 and a pump to circulate the acid recovery aqueous solution S1 between the inside of the circulation tank and the inside of the acid recovery chamber 11. In short, the circulation device 81 just has to be installed so that the liquid in the circulation tank can be circulated or supplied by using the pump via a circulation path such as a pipe communicating with the acid recovery chamber 11, and the structure of the circulation device 81 is not particularly limited. In FIG. 1, the circulation device 81 is shown below the acid recovery chamber 11, but this is merely a schematic example and does not specify the location of the circulation device 81 (the same applies to the other circulation devices 82, 83, and 84). Moreover, the circulation device 81 compensates for a decrease in the liquid amount in the acid recovery chamber 11 if necessary, and also replaces the acid recovery aqueous solution S1 with pure water or the like, thereby preventing the acid recovery aqueous solution S1 in the acid recovery chamber 11 from dropping in pH (being strongly acidified). Similarly, the circulation device 82 is a device to circulate the Li supply aqueous solution S0 so as to continuously replace the Li supply aqueous solution S0 in the supply chamber 12. The circulation devices 83 and 84 are devices to circulate the aqueous solutions S2 and S3 so as to continuously replace the aqueous solutions S2 and S3 in the chambers 13 and 14 and to continuously replace the aqueous solutions S2 and S3 in contact with the electrodes 45 and 46 and the electrolyte membrane 2 in rotation. In addition, the circulation device 83 may be equipped with a sedimentation tank for precipitating metal ions $M^{n+}$ other than $Li^+$ and a filter for preventing the precipitates from returning to the chamber 13, while the circulation device 84 may be equipped with a sedimentation tank for precipitating $Li^+$ and a filter for preventing the precipitates from returning to the chamber 14. In particular, since hydroxides of metal ions $M^{n+}$ excluding $Na^+$ precipitate in the alkali recovery aqueous solution S2, it is preferable to recover the hydroxides in the circulation device 83. The sedimentation tank of the circulation device 84 generates and precipitates lithium carbonate ($Li_2CO_3$), for example, by carbon dioxide ($CO_2$) gas bubbling or the like. Also, each of the circulation devices 81, 82, 83, and 84 may include an agitator equipped with a screw that rotates in the chamber, and be structured as needed. For example, in the case where the Li supply aqueous solution S0 is seawater, the circulation device 82 may have a structure opened to the sea instead of being equipped with the circulation tank.

The lithium recovery device 1 may further include a heater device to heat the electrolyte membrane 2 via the Li recovery aqueous solution S3 or the alkali recovery aqueous solution S2 so as to heat the electrolyte membrane 2 to a predetermined temperature. The heater device may be a known heater for heating a liquid, and preferably has a temperature adjustment function. The heater device is, for example, of a throw-in type (immersion type) that is installed by being immersed in the Li recovery aqueous solution S3 in the Li recovery chamber 14 or the alkali recovery aqueous solution S2 in the alkali recovery chamber 13. Instead, the heater device may heat the aqueous solution in the circulation tank of the circulation device 83 or the circulation device 84. The heater device only has to be capable of heating the electrolyte membrane 2 to the predetermined temperature and does not have to make the liquid temperatures of the Li recovery aqueous solution S3 and the alkali recovery aqueous solution S2 uniform. Here, the liquid temperature of the alkali recovery aqueous solution S2 must be within a temperature range applicable to the ion exchange membrane 33. The electrolyte membrane 2 may have any temperature that is equal to or higher than the freezing points and lower than the boiling points of the aqueous solutions S3 and S2, and preferably has a high temperature as will be described later.

The lithium recovery device 1 may further include liquid level sensors or the like to detect changes in the liquid amounts of the aqueous solutions S0, S1, S2, and S3 during operation. Moreover, if carbon dioxide ($CO_2$) in the atmosphere unintentionally dissolves in the alkali recovery aqueous solution S2 and the Li recovery aqueous solution S3 during operation and causes lithium carbonate ($Li_2CO_3$) or the like to precipitate, the conductivity of the aqueous solutions S2 and S3 may decrease, which is undesirable. To prevent this, the lithium recovery device 1 is preferably structured such that the aqueous solutions S2 and S3 may not be exposed to the atmosphere. In addition, since $O_2$ and $H_2$ are generated by the reactions of Formulas (1) and (3) during operation, the lithium recovery device 1 preferably includes an exhaust unit to exhaust these gases so as to prevent the inside of the device from being filled with the gases from the viewpoint of safety. Further, if the Li supply aqueous solution S0 contains chloride ions ($Cl^-$), chlorine ($Cl_2$) may be generated (see Modification to be described later). The chlorine can be recovered as a by-product. For this purpose, it is preferable that the lithium recovery device 1 be provided with, for example, check valves in the respective chambers 11, 12, 13, and 14 of the processing tank 7 so as to exhaust gases generated from the aqueous solutions S0, S1, S2, and S3 to the outside of the processing tank 7 and to prevent outside air from flowing into the processing tank 7. In the lithium recovery device 1, it is possible to recover $O_2$ and $Cl_2$ from the acid recovery chamber 11, $O_2$ and $H_2$ from the alkali recovery chamber 13, and $H_2$ from the Li recovery chamber 14.

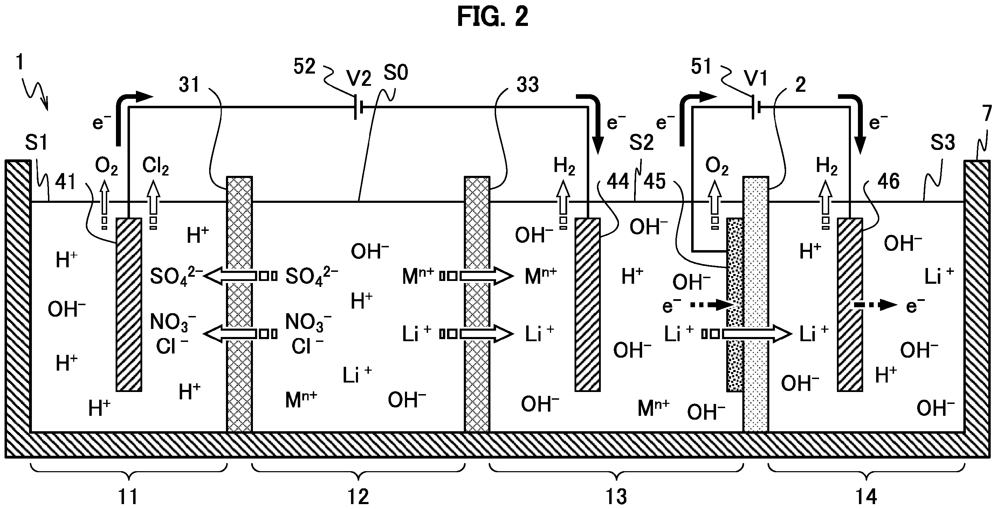

Although the chambers 11, 12, 13, and 14 of the processing tank 7 are arranged in a straight line in FIGs. 1 and 2, the lithium recovery device 1 may have a structure in which the processing tank 7 is bent, for example, by 90° in the alkali recovery chamber 13 in which the two electrodes 44 and 45 connected to the respectively different power supplies 51 and 52 are provided. Specifically, the ion exchange membrane 33 and the electrolyte membrane 2 are arranged perpendicularly to each other, demarcating the alkali recovery chamber 13, while the electrode 44 and the electrode 45 are also arranged perpendicularly to each other.

(Lithium Recovery Method)

The lithium recovery method according to the first embodiment of the present invention will be described in reference to FIG. 2. The lithium recovery method according to the present embodiment is carried out as follows by the lithium recovery device 1 according to the first embodiment shown in FIG. 1. In FIG. 2, the circulation devices 81 to 84 are omitted.

In the lithium recovery device 1, the $Li^+$ transfer power supply 51 applies, to the electrode 45, a positive voltage V1 (+V1) relative to the electrode 46. Meanwhile, the ion transfer power supply 52 applies, to the electrode 41, a positive voltage V2 (+V2) relative to the electrode 44. With the application of the voltage +V2, the anions such as $SO_4^{2-}$, $NO_3^-$, and

Cl⁻ in the Li supply aqueous solution S0 in the supply chamber 12 pass through the ion exchange membrane 31 and migrate to the acid recovery aqueous solution S1 in the acid recovery chamber 11. At the same time, cations such as Li⁺ in the Li supply aqueous solution S0 pass through the ion exchange membrane 33 and migrate to the alkali recovery aqueous solution S2 in the alkali recovery chamber 13. When the voltage V2 is higher than a certain value, the reaction of Formula (1) below occurs near the electrode 41, generating $O_2$. In addition, when the Li supply aqueous solution S0 contains chloride ions (Cl⁻), the reaction of Formula (7) below occurs, generating chlorine ($Cl_2$). At the same time, the reaction of Formula (4) occurs near the electrode 44, generating $H_2$.

[Chem. 3]

$$2OH^- \rightarrow H_2O + \frac{1}{2}O_2 \uparrow + 2e^- \ \cdots \ (1)$$

$$2Cl^- \rightarrow Cl_2 \uparrow + 2e^- \qquad \cdots \ (7)$$

$$2H_2O + 2e^- \rightarrow 2OH^- + H_2 \uparrow \ \cdots \ (4)$$

With the application of the voltage +V1, the following reactions occur in the alkali recovery aqueous solution S2. Near the electrode 45, hydroxide ions (OH⁻) in the alkali recovery aqueous solution S2 cause the reaction of Formula (1) below, generating water ($H_2O$) and oxygen ($O_2$) and releasing electrons e⁻ to the electrode 45. In the alkali recovery aqueous solution S2, as OH⁻ decreases, the reaction of Formula (2) below, in which Li⁺ in the alkali recovery aqueous solution S2 migrates to the inside of the electrolyte membrane 2, occurs near the surface of the electrolyte membrane 2, in other words, the electrode 45 in order to keep a charge balance. In the alkali recovery aqueous solution S2, a reaction of Formula (5) below occurs as a combination of the reaction of Formula (1) below and the reaction of Formula (2) below.

[Chem. 4]

$$2OH^- \rightarrow H_2O + \frac{1}{2}O_2 \uparrow + 2e^- \ \cdots \ (1)$$

$$Li^+ \rightarrow Li^+(electrolyte) \qquad \cdots \ (2)$$

$$2Li^+ + 2OH^- \rightarrow 2Li^+(electrolyte) + H_2O + \frac{1}{2}O_2 \uparrow + 2e^- \ \cdots \ (5)$$

Meanwhile, in the Li recovery aqueous solution S3 in the Li recovery chamber 14, the following reactions occur with the application of the voltage +V1. Near the electrode 46, $H_2O$ in the Li recovery aqueous solution S3 is supplied with electrons e⁻, causing the reaction of Formula (4) below to generate hydrogen ($H_2$) and OH⁻. In the Li recovery aqueous solution S3, as OH⁻ increases, the reaction of Formula (3) below in which Li⁺ in the electrolyte membrane 2 migrates to the recovery aqueous solution S3 occurs in order to keep a charge balance. In the Li recovery aqueous solution S3, a reaction of Formula (6) below occurs as a combination of the reaction of Formula (3) below and the reaction of Formula (4) below are combined (4).

[Chem. 5]

$$2H_2O + 2e^- \rightarrow 2OH^- + H_2 \uparrow \ \cdots \ (4)$$

$$Li^+(electrolyte) \rightarrow Li^+ \qquad \cdots \ (3)$$

$$2Li^+(electrolyte) + 2H_2O + 2e^- \rightarrow 2OH^- + H_2 \uparrow + 2Li^+ \ \cdots \ (6)$$

A sequence from the reaction of Formula (2) to the reaction of Formula (3), more specifically, the penetration of Li⁺ in the alkali recovery aqueous solution S2 from the surface to the inside of the electrolyte membrane 2, the movement of Li⁺ through the electrolyte membrane 2, and the migration of Li⁺ in the electrolyte membrane 2 to the Li recovery aqueous solution S3, proceeds as follows. With the application of the voltage +V1, Li⁺ in the alkali recovery aqueous solution S2 penetrates into lattice defect sites on the surface of the electrolyte membrane 2 as the reaction of Formula (2). Then, since the electrolyte membrane 2 has a potential gradient due to the application of the voltage +V1 in which the opposite side (the Li recovery chamber 14 side) has a lower potential, the $Li^+$ penetrated into the lattice defect sites on the surface jumps (hops) to nearby lattice defect sites on a deeper side in the electrolyte membrane 2. In this way, $Li^+$ repeats movement from the lattice defect sites to the nearby lattice defect sites in the electrolyte membrane 2, and eventually migrates from the lattice defect sites on the surface on the Li recovery chamber 14 side to the Li recovery aqueous solution S3 as the reaction of Formula (3). Since $Li^+$ in the lattice defect sites on the surface of the electrolyte membrane 2 on the alkali recovery chamber 13 side moves to the deeper side of the electrolyte membrane 2, other $Li^+$ adsorbed nearby and $Li^+$ in the alkali recovery aqueous solution S2 penetrate into the vacant lattice defect sites. These $Li^+$ ions move through the electrolyte membrane 2 in the same manner.

In the lithium recovery method according to the present embodiment, the voltage V1 is set to be equal to or higher than a voltage at which a water electrolysis reaction occurs, so that the reaction of Formula (1) and the reaction of Formula (4) occur and $Li^+$ moves through the electrolyte membrane 2. The voltage at which the water electrolysis reaction occurs is +1.229 V (25°C) on condition that the alkali recovery aqueous solution S2 and the Li recovery aqueous solution S3 have an equal pH (hydrogen ion concentration). In reality, however, depending on the electrode performance or the like that determines the electrode reaction overvoltage of each of the electrodes 45 and 46, the voltage V1 has to be set to a value several hundred mV higher than the theoretical voltage of 1.229 V. In addition, as the pH of the alkali recovery aqueous solution S2 becomes higher than that of the Li recovery aqueous solution S3, the voltage at which the water electrolysis reaction occurs becomes lower. In the lithium recovery method according to the present embodiment, after $Li^+$ in the Li supply aqueous solution S0 together with the other cations permeates through the ion exchange membrane 33 and migrates to the alkali recovery aqueous solution S2, $Li^+$ is moved through the electrolyte membrane 2. In this procedure, even when the Li supply aqueous solution S0 contains anions other than $OH^-$ such as $SO_4^{2-}$, the alkali recovery aqueous solution S2 in contact with the $Li^+$ supply side surface of the electrolyte membrane 2 does not contain anions such as $SO_4^{2-}$. Therefore, no anions other than $OH^-$ are adsorbed on the above surface of the electrolyte membrane 2, and the movement of $Li^+$ through the electrolyte membrane 2 is not blocked. Furthermore, since the alkali recovery aqueous solution S2 can be made to have a high pH, $Li^+$ can be migrated to the Li recovery aqueous solution S3 even if the voltage V1 is set low. In addition, since not only cations including $Li^+$ but also anions such as $SO_4^2$ are extracted concurrently from the Li supply aqueous solution S0, the Li supply aqueous solution S0 does not become strongly acid during operation of the lithium recovery device 1, and the lithium recovery device 1 can be operated safely.

The higher the voltage V1, the larger the reaction amounts of the reaction of Formula (1) and the reaction of Formula (4) and accordingly the faster the reaction of Formula (2) and the reaction of Formula (3). Moreover, the electrolyte membrane 2 has a larger potential gradient between both surfaces, and the $Li^+$ migration amount per hour ($Li^+$ mobility) becomes larger. However, when the potential difference between both surfaces of the electrolyte membrane 2 is equal to or higher than a voltage at which some of metal ions included in the electrolyte membrane 2 are reduced (for example, $Ti^{4+} + e^- \rightarrow Ti^{3+}$ when the Electrolyte membrane 2 is made of LLTO), the electrolyte membrane 2 comes to conduct electrons $e^-$ from the Li recovery chamber 14 side to the alkali recovery chamber 13 side. As a result, most of electrical energy applied is consumed by the conduction of electrons $e^-$, so the voltage dependence of the $Li^+$ mobility decreases and the energy efficiency in the $Li^+$ migration sharply drops (see Patent Literature 3). In particular, transition metal ions among the metal ions constituting the electrolyte membrane 2 are prone to this phenomenon. In the lithium recovery device 1 according to the present embodiment, since one of the electrode 45 and the electrode 46, the electrode 46 herein, is located away from the electrolyte membrane 2, the potential difference between both surfaces of the electrolyte membrane 2 is kept small relative to the voltage V1 and the electrolyte membrane 2 is unlikely to exhibit electron conductivity (see Patent Literature 3). However, if the voltage V1 is set to a certain high level or more, the potential difference between both surfaces of the electrolyte membrane 2 may reach a potential difference at which the electrolyte membrane 2 exhibits electron conductivity, so it is preferable to set the voltage V1 below this voltage. The relationship between the voltage V1 and the potential difference between both surfaces of the electrolyte membrane 2 depends on the distance between the electrode 46 and the electrolyte membrane 2 and the electron conductivity of the Li recovery aqueous solution S3. In particular, as the recovery of $Li^+$ progresses and the $Li^+$ concentration (LiOH concentration) in the Li recovery aqueous solution S3 increases, the electron conductivity of the Li recovery aqueous solution S3 also increases and the potential difference between both surfaces of the electrolyte membrane 2 increases to be close to the voltage V1. Therefore, it is preferable to set the voltage V1 with the electron conductivity of the Li recovery aqueous solution S3 during operation taken into consideration.

Here, in the Li recovery through electrodialysis, the $Li^+$ mobility is rate-limited by the diffusion of $Li^+$ to the supply side surface of the electrolyte membrane. Therefore, when the $Li^+$ concentration in the supply side aqueous solution is low, it is difficult to increase the $Li^+$ mobility even if the applied voltage (V1) between both surfaces of the electrolyte membrane is increased. To address this, from the standpoint of energy efficiency, if the alkali recovery aqueous solution S2 is a solution having a low $Li^+$ concentration such as pure water at the start of operation, it is preferable to apply only the voltage +V2 from the ion transfer power supply 52 immediately after the start of operation, and then start applying the voltage +V1 from the $Li^+$ transfer power supply 51 after an amount of $Li^+$ contained in the alkali recovery aqueous solution S2 reaches a certain amount.

As the voltage V2 becomes higher, an electric field generated in the aqueous solutions S1, S0, and S2 between the electrodes 41 and 44 becomes stronger and accordingly a larger amount of cations including $Li^+$ contained in the Li supply aqueous solution S0 migrates to the alkali recovery aqueous solution S2 per hour. When this $Li^+$ migration amount per hour is small, the $Li^+$ concentration in the alkali recovery aqueous solution S2 decreases and the $Li^+$ mobility from the alkali recovery aqueous solution S2 to the Li recovery aqueous solution S3 is rate-limited. For this reason, it is preferable to set the voltage V2 such that the $Li^+$ mobility (through the electrolyte membrane 2) from the alkali recovery aqueous solution S2 to the Li recovery aqueous solution S3 may not be rate-limited. In addition, the electric field generated with the application of the voltage V2 becomes stronger relative to the voltage V2 as the distance between the electrode 41 and the ion exchange membrane 31 and the distance between the electrode 44 and the ion exchange membrane 33 become shorter and as the electron conductivity of the aqueous solutions S1 and S2 becomes higher. Therefore, if the arrangement of the electrodes 41 and 44 is adjusted and ion-containing aqueous solutions are used as the aqueous solutions S1 and S2 at the start of operation, the migration amount per hour of ions such as $Li^+$ can be increased relative to the voltage V2.

In the case where the $Li^+$ migration amount per hour from the Li supply aqueous solution S0 to the alkali recovery aqueous solution S2 is smaller than the migration amount through the electrolyte membrane 2 (the $Li^+$ mobility), when the $Li^+$ concentration in the alkali recovery aqueous solution S2 decreases to a predetermined concentration or lower, the $Li^+$ transfer power supply 51 may be stopped and only the ion transfer power supply 52 may be driven for a period until a sufficient amount of $Li^+$ migrates from the Li supply aqueous solution S0. On the other hand, when the $Li^+$ concentration in the alkali recovery aqueous solution S2 is sufficiently high, the ion transfer power supply 52 may be stopped and only the $Li^+$ transfer power supply 51 may be driven. Accordingly, for example, the $Li^+$ transfer power supply 51 and the ion transfer power supply 52 may be driven alternately at certain time intervals.

The $Li^+$ movement in the electrolyte membrane 2 becomes faster as not only the voltage V1 but also the temperature increases. For this reason, it is preferable to make the electrolyte membrane 2 have a high temperature. Meanwhile, the aqueous solutions S2 and S3 has lower resistance as the temperature increases. The temperature range applicable to the electrolyte membrane 2 is equal to or higher than the freezing points and lower than the boiling points of the aqueous solutions S2 and S3, and is preferably equal to or higher than 20°C.

The lithium recovery device 1 according to the present embodiment includes the two power supplies 51 and 52, and the applied voltages (V1 and V2) between both surfaces of the electrolyte membrane 2 and between both surfaces of each of the ion exchange membranes 31 and 33 can be set individually. Therefore, both of the voltage for moving $Li^+$ through the electrolyte membrane 2 and the voltage for migrating cations including $Li^+$ and migrating anions from the Li supply aqueous solution S0 to the aqueous solutions S2 and S1, respectively, can be set to appropriate levels. As described above, only one of the power supplies 51 and 52 may be driven as needed. In addition, when the voltage V2 is applied by the electrodes 41 and 44 arranged on both outer sides of the ion exchange membranes 31 and 33 that demarcate both sides of the supply chamber 12 containing the Li supply aqueous solution S0, the lithium recovery device 1 extracts anions and cations with the same valence from the Li supply aqueous solution S0, although depending on the ion conductivity of each of the ion exchange membranes 31 and 33. Therefore, during operation, the pH of the Li supply aqueous solution S0 is unlikely to change and the precipitation of metal ions in the Li supply aqueous solution S0 is suppressed.

In the case where the Li supply aqueous solution S0 does not contain anions other than hydroxide ions, more specifically, does not contain anions that the ion exchange membrane 31 can conduct, only hydroxide ions migrate from the Li supply aqueous solution S0 to the acid recovery aqueous solution S1. In the acid recovery aqueous solution S1, the migrated hydroxide ions are consumed by the reaction of Formula (1) near the electrode 41, the amount of anions remains unchanged and accordingly the pH also remains unchanged. An example of such a Li supply aqueous solution S0 is an aqueous solution in which a waste battery crushed and roasted is dissolved in water.

In the lithium recovery method according to the present embodiment, along with a passage of an operation time, the liquid amounts of the Li supply aqueous solution S0, the alkali recovery aqueous solution S2, the Li recovery aqueous solution S3, and further the acid recovery aqueous solution S1 decrease. For this reason, it is preferable to operate the circulation devices 82, 83, 84, and 81, for example, when the liquid level sensors detect the liquid levels or at a time set in a timer, thereby periodically or constantly replenishing the chambers 12, 13, and 14 and the chamber 11 with the respective aqueous solutions or their solvents (pure water). In the lithium recovery device 1, the liquid levels in the chambers 11, 12, 13, and 14 are preferably equal to each other during operation.

From the Li recovery aqueous solution S3 in the Li recovery chamber 14 and the circulation tank of the circulation device 84 after the end of operation, Li can be recovered by, for example, evaporating the moisture content as needed to concentrate Li, followed by carbon dioxide ($CO_2$) gas bubbling or the like to generate and precipitate lithium carbonate ($Li_2CO_3$). Alternatively, after the lithium carbonate is generated, Li can be also recovered by further supersaturating the resultant solution by cooling, evaporating the moisture content, or doing the like to generate and precipitate lithium hydroxide (LiOH). In addition, during operation, $Li^+$ may be precipitated as lithium carbonate or the like in the sedimentation tank of the circulation device 84. This structure can inhibit the pH of the Li recovery aqueous solution S3 from becoming

EP 4 487 940 A1

high during operation of the lithium recovery device 1.

Similarly, from the alkali recovery aqueous solution S2 in the alkali recovery chamber 13 and the circulation tank of the circulation device 83 after the end of operation or further in the circulation tank in the circulation device 83 during operation, the metal ions $M^{n+}$ other than $Li^+$ can be recovered in a known method depending on a type of the metal ions $M^{n+}$. As described above, most of the metal ions $M^{n+}$ excluding $Na^+$ precipitate by generating hydroxides. In addition, the acid recovery aqueous solution S1 in the acid recovery chamber 11 and the circulation tank of the circulation device 81 can be reused, for example, as an acid for dissolving roasted waste batteries.

In the case where the ion exchange membrane 33 is a monovalent ion selectively permeable ion exchange membrane, only monovalent cations such as $Li^+$, $Na^+$, and $K^+$ migrate to the alkali recovery aqueous solution S2 in the alkali recovery chamber 13 and divalent and trivalent cations such as $CO^{2+}$, $Mg^{2+}$, and $Al^{3+}$ remain in the Li supply aqueous solution S0. Therefore, the amount of the precipitate in the alkali recovery aqueous solution S2 in contact with the supply side surface of the electrolyte membrane 2 can be kept small and the $Li^+$ migration from the alkali recovery aqueous solution S2 to the Li recovery aqueous solution S3 is not blocked. In addition, the monovalent cations other than $Li^+$ can be recovered in the circulation device 83. On the other hand, the multivalent cations remaining in the Li supply aqueous solution S0 can be recovered in the circulation device 82.

The solution S3 for containing $Li^+$ is not limited to an aqueous solution, but may be a general liquid electrolyte for use in a lithium-ion secondary battery. Specifically, the liquid electrolyte is a solution in which $LiPF_6$, $LiClO_4$, $LiBF_4$, $LiN(CF_3SO_2)_2$, $LiN(C_2F_5SO_2)_2$, or the like is dissolved as an electrolyte in an organic solvent such as ethylene carbonate, propylene carbonate, $\gamma$-butyrolactone, dimethyl carbonate, diethyl carbonate, ethyl methyl carbonate, 1,2-dimethoxyethane, or acetonitrile.

(Modifications)

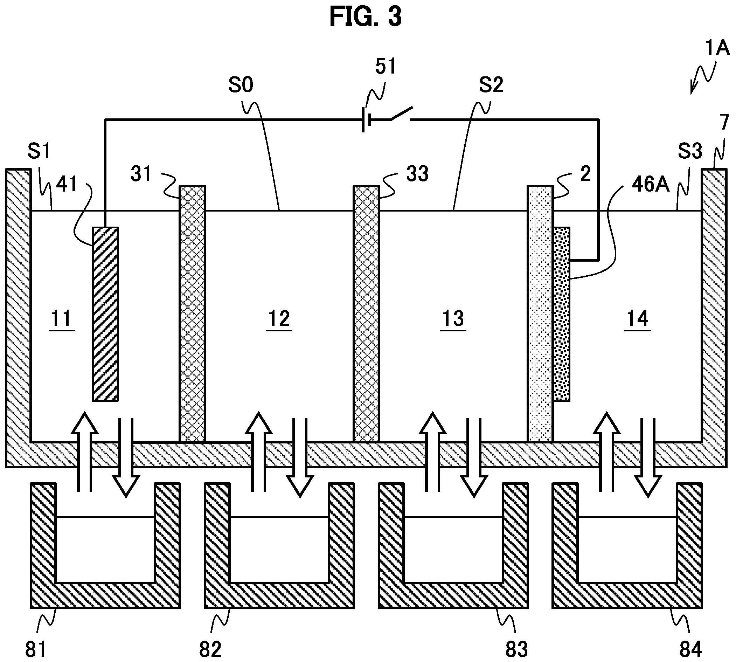

In the lithium recovery device according to the above-described embodiment, the two power supplies separately form the potential difference between both surfaces of each of the two ion exchange membranes and the potential difference between both surfaces of the electrolyte membrane. Instead, a potential difference may be formed for each of the ion exchange membranes or collectively for the two ion exchange membranes and the electrolyte membrane. Hereinafter, a lithium recovery device and a lithium recovery method according to a modification of the first embodiment of the present invention will be described in reference to FIGs. 3 to 6.

As shown in FIG. 3, a lithium recovery device 1A according to a first modification of the first embodiment of the present invention includes a processing tank 7, ion exchange membranes 31 and 33 and an electrolyte membrane (lithium ion-conductive electrolyte membrane) 2 that partition the processing tank 7 into four chambers 11, 12, 13, and 14 in this order, an electrode 46A provided in contact with the electrolyte membrane 2 in the Li recovery chamber 14, an electrode 41 provided in the acid recovery chamber 11, a power supply 51 connected between the electrodes 41 and 46A with the Li recovery chamber 14 side (the electrode 46A) set negative, and circulation devices (circulation tanks and circulation units) 81, 82, 83, and 84 provided for the respective chambers 11, 12, 13, and 14. As compared with the lithium recovery device 1 according to the above-descried embodiment shown in FIG. 1, the lithium recovery device 1A according to the present modification has a structure in which only one power supply 51 is provided and both poles of the power supply 51 are connected to the electrodes 41 and 46A arranged in the respective chambers 11 and 14 at both ends.

The electrode 41 is provided in the acid recovery chamber 11 and the electrode 46A is provided in the Li recovery chamber 14 so that the ion exchange membranes 31 and 33 and the electrolyte membrane 2 are collectively sandwiched between the electrodes 41 and 46A. With this structure, by one pair of the electrodes 41 and 46A, a voltage can be applied for generating a potential difference between both surfaces of each of the ion exchange membrane 31, the ion exchange membrane 33, and the electrolyte membrane 2 with its Li recovery chamber 14 side having a lower potential. The electrode 41 and the electrode 46A are preferably arranged in parallel to each other. The electrode 41 may be structured as in the above-described embodiment and is preferably made of a material having catalytic activity for the reaction of Formula (1) below. In the lithium recovery device 1A, since the electrode in contact with the surface of the electrolyte membrane 2 on the alkali recovery chamber 13 side is not provided, the electrode (first electrode) 46A is provided in contact with the surface on the Li recovery chamber 14 side. For this reason, the electrode 46A preferably has a porous structure such as a mesh structure as in the electrode (second electrode) 45 in the above-described embodiment. As in the electrode 46 in the above-described embodiment, the electrode 46A is preferably made of a material that has catalytic activity for the reaction of Formula (4) below and further has catalytic activity for the reaction of Formula (3) below. As such an electrode material for the electrode 46A, for example, Pt is preferable.

[Chem. 6]

$$2OH^- \rightarrow H_2O + \frac{1}{2}O_2 \uparrow + 2e^- \quad \cdots (1)$$

$$2H_2O + 2e^- \rightarrow 2OH^- + H_2 \uparrow \quad \cdots (4)$$

$$Li^+(electrolyte) \rightarrow Li^+ \quad \cdots (3)$$

In the lithium recovery device 1A according to the present modification, the power supply 51 is connected between the electrodes 41 and 46A with its Li recovery chamber 14 side, that is, the electrode 46A set negative. The power supply 51 collectively applies a voltage V1 to the ion exchange membranes 31 and 33 and the electrolyte membrane 2 to form a potential difference between both surfaces of each of the ion exchange membranes 31 and 33 and the electrolyte membrane 2 with its Li recovery chamber 14 side having a lower potential. With these potential differences, anions contained in the Li supply aqueous solution S0 are migrated to the acid recovery aqueous solution S1, metal ions contained in the Li supply aqueous solution S0 are migrated to the alkali recovery aqueous solution S2, and a potential gradient is generated for the electrolyte membrane 2 to conduct $Li^+$.

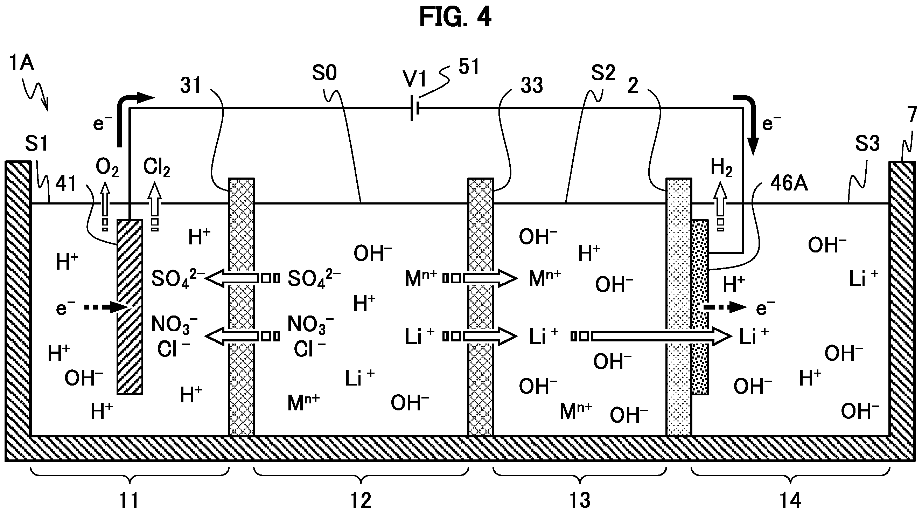

The lithium recovery method according to the modification of the first embodiment of the present invention will be described in reference to FIG. 4. In FIG. 4, the circulation devices 81 to 84 are omitted. The lithium recovery method according to the present modification can be carried out by the lithium recovery device 1A according to the modification of the first embodiment shown in FIG. 3 in the same manner as in the lithium recovery method according to the first embodiment.

In the lithium recovery method according to the present modification, as shown in FIG. 4, the power supply 51 applies, to the electrode 41, the positive voltage V1 (+V1) relative to the electrode 46A. Then, near the electrode 41, hydroxide ions (OH-) in the acid recovery aqueous solution S1 causes the reaction of Formula (1) below, generating $H_2O$ and $O_2$ and releasing electrons e- to the electrode 41. In the case where the Li supply aqueous solution S0 contains chloride ions (Cl-), the reaction of Formula (7) below occurs to generate chlorine ($Cl_2$). In the acid recovery aqueous solution S1, as OH- decreases, OH- migrates from the Li supply aqueous solution S0. Also, OH- migrates from the alkali recovery aqueous solution S2 to the Li supply aqueous solution S0. Then, in the alkali recovery aqueous solution S2, as OH- decreases, the reaction of Formula (2) below in which $Li^+$ in the alkali recovery aqueous solution S2 migrates into the electrolyte membrane 2 occurs near the surface of the electrolyte membrane 2 in order to keep a charge balance.

[Chem. 7]

$$2OH^- \rightarrow H_2O + \frac{1}{2}O_2 \uparrow + 2e^- \quad \cdots (1)$$

$$2Cl^- \rightarrow Cl_2 \uparrow + 2e^- \quad \cdots (7)$$

$$Li^+ \rightarrow Li^+(electrolyte) \quad \cdots (2)$$

Meanwhile, near the electrode 46A, as in the first embodiment, $H_2O$ in the Li recovery aqueous solution S3 is supplied with electrons e-, causing the reaction of Formula (4) below to generate $H_2$ and OH-. As OH- increases, the reaction of Formula (3) below in which $Li^+$ in the electrolyte membrane 2 migrates to the Li recovery aqueous solution S3 occurs in order to keep a charge balance.

[Chem. 8]

$$2H_2O + 2e^- \rightarrow 2OH^- + H_2 \uparrow \quad \cdots (4)$$

$$Li^+(electrolyte) \rightarrow Li^+ \quad \cdots (3)$$

In the lithium recovery method according to the present modification, since the potential gradient between both surfaces of the electrolyte membrane 2 is small relative to the voltage V1, it is preferable to set the voltage V1 to a higher value than in the above-described embodiment.

Thus, with the lithium recovery device 1A including the one power supply 51 and the one pair of the electrodes 41 and 46A connected to both poles of the power supply 51, it is possible to selectively recover $Li^+$ as in the above-described embodiment. According to the lithium recovery device 1A, the number of components can be reduced, and the size of the processing tank 7 can be shortened in the partitioning direction because there is no need to provide the two electrodes away from each other in the same chamber as in the alkali recovery chamber 13 in the lithium recovery device 1.

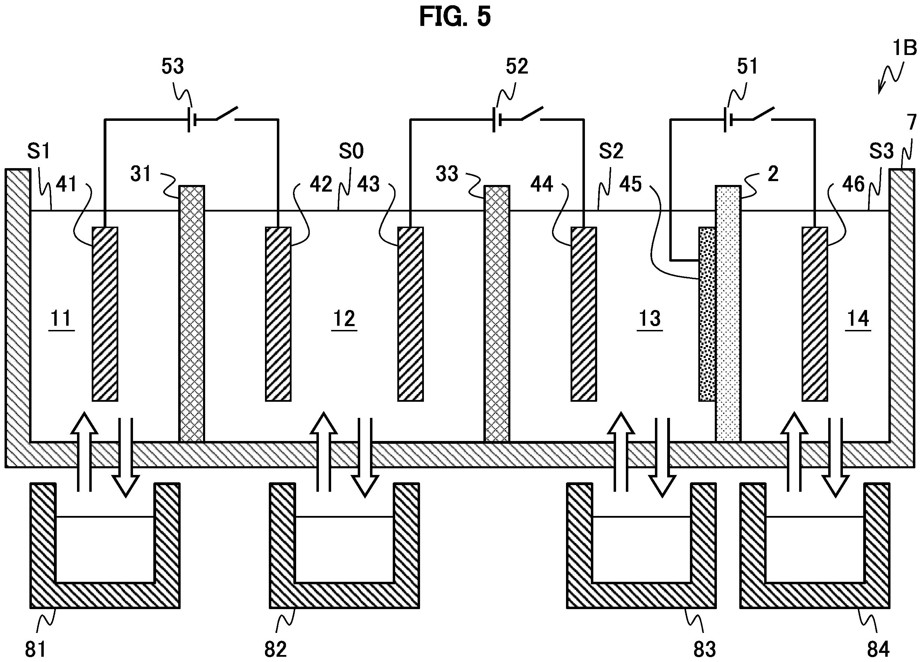

In the lithium recovery device according to the above-described embodiment, a potential difference can be also formed for each of the ion exchange membranes in addition to the electrolyte membrane. Specifically, as shown in FIG. 5, a lithium recovery device 1B according to a second modification of the first embodiment of the present invention includes a processing tank 7, ion exchange membranes 31 and 33 and an electrolyte membrane (lithium ion-conductive electrolyte membrane) 2 that partition the processing tank 7 into four chambers 11, 12, 13, and 14 in this order, electrodes 45 and 46 provided in contact with or facing the electrolyte membrane 2 in the respective chambers 13 and 14 partitioned by the electrolyte membrane 2, an electrode 41 provided in the acid recovery chamber 11, electrodes 42 and 43 provided in the supply chamber 12, the electrode 42 facing the ion exchange membrane 31, the electrode 43 provided away from the electrode 42 and facing the ion exchange membrane 33, an electrode 44 provided away from the electrode 45 in the alkali recovery chamber 13, a Li$^+$ transfer power supply 51 connected between the electrodes 45 and 46, an ion transfer power supply 52 connected between the electrodes 43 and 44, an ion transfer power supply 53 connected between the electrodes 41 and 42, and circulation devices (circulation tanks and circulation units) 81, 82, 83, and 84 provided for the respective chambers 11, 12, 13, and 14. Each of the power supplies 51, 52, and 53 is connected with its Li recovery chamber 14 side set negative. As compared with the lithium recovery device 1 according to the above-described embodiment shown in FIG. 1, the lithium recovery device 1B according to the present modification has a structure in which the electrodes 42 and 43 are added to the supply chamber 12 and each of the ion transfer power supplies 53 and 52 individually applies a voltage between both surfaces of the corresponding one of the ion exchange membranes 31 and 33.

The electrodes 41, 42, 43, 44, 45, and 46 are electrodes for applying voltages for generating a potential difference between both surfaces of the ion exchange membrane 31, the ion exchange membrane 33, and the electrolyte membrane 2 with their Li recovery chamber 14 sides each having a lower potential. The electrode 41 is provided in the acid recovery chamber 11 and the electrode 42 is provided in the supply chamber 12 so as to sandwich the ion exchange membrane 31 in between. The electrode 43 is provided in the supply chamber 12 and the electrode 44 is provided in the alkali recovery chamber 13 so as to sandwich the ion exchange membrane 33 in between. The electrode 45 and the electrode 46 are provided so as to sandwich the electrolyte membrane 2 such that the electrode 45 is in contact with the surface of the electrolyte membrane 2 on the alkali recovery chamber 13 side while the electrode 46 is facing the surface of the electrolyte membrane 2 on the Li recovery chamber 14 side, as in the lithium recovery device 1 according to the above-described embodiment. It is preferable to arrange the electrodes 41 and 42 in parallel to each other, arrange the electrodes 43 and 44 in parallel to each other, and arrange the electrodes 45 and 46 in parallel to each other.

The electrodes 41, 44, 45, and 46 may be structured as in the above-described embodiment. The electrodes 42 and 43 are made of an electrode material that is stable in the Li supply aqueous solution S0 even under voltage application and after the end of operation of the lithium recovery device 1B (after Li recovery). In addition, the electrodes 42 and 43 may be arranged away from the ion exchange membranes 31 and 33 as shown in FIG. 5 as in the electrodes 41 and 44 and each preferably have a shape such as a mesh shape to allow an aqueous solution to pass therethrough so that the Li supply aqueous solution S0 in contact with the surfaces of the ion exchange membranes 31 and 33 can be continuously replaced in rotation. The electrode 42 and the electrode 43 are arranged away from each other as in the electrodes 44 and 45. To this ends, the supply chamber 12, in other words, the distance between the ion exchange membrane 31 and the ion exchange membrane 33 is designed to have a sufficient length in the partitioning direction of the processing tank 7 (the right-left direction in FIG. 5).

In the present modification, the ion transfer power supply 52 has its positive electrode connected to the electrode 43 and its negative electrode connected to the electrode 44. The ion transfer power supply 53 is a direct-current power supply as in the case of the ion transfer power supply 52, and has its positive electrode connected to the electrode 41 and its negative electrode connected to the electrode 42.

The lithium recovery method by the lithium recovery device 1B according to the present modification can be carried out in the same manner as in the case of the lithium recovery method according to the above-described embodiment (see FIG. 2). According to the lithium recovery device 1B, the voltages applied between both surfaces of the ion exchange membrane 31 and between both surfaces of the ion exchange membrane 33 can be set individually. For this reason, both of the voltages for migrating cations including Li$^+$ to the alkali recovery aqueous solution S2 and migrating anions to the acid recovery aqueous solution S1 from the Li supply aqueous solution S0 can be set to appropriate levels. Moreover, only one of the power supplies 52 and 53 may be driven as needed to migrate only cations or anions, so that the pH of the Li supply aqueous solution S0 during operation can be managed easily.

The lithium recovery device 1B according to the present modification may have a structure bent in the alkali recovery chamber 13 as in the lithium recovery device 1 according to the above-described embodiment. In addition, the lithium recovery device 1B may have a structure also bent in the supply chamber 12 with the ion exchange membrane 31 and the ion exchange membrane 33 arranged perpendicularly to each other.

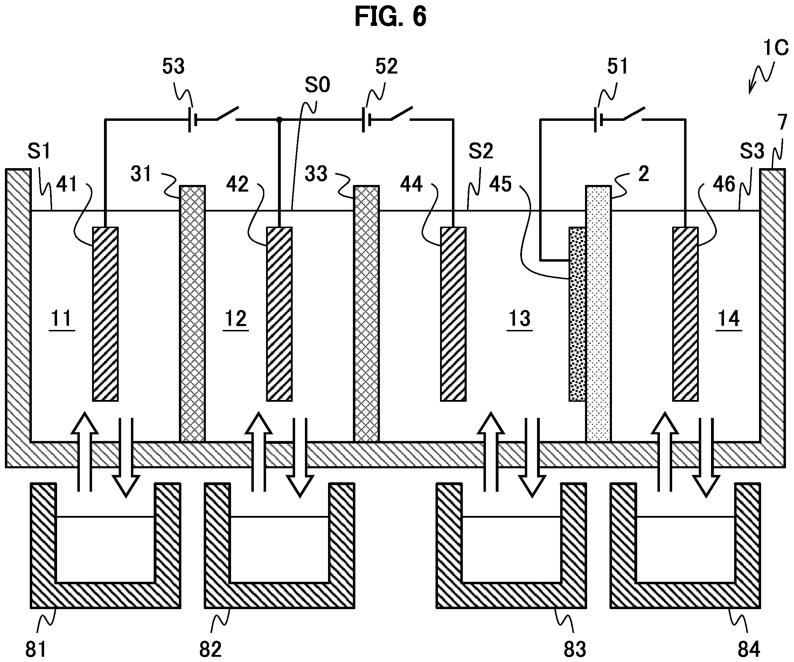

In the lithium recovery device 1B according to the second modification, the electrodes 42 and 43 provided in the supply chamber 12 may be integrated with each other. Specifically, as shown in FIG. 6, as compared with the lithium recovery device 1B, a lithium recovery device 1C according to a third modification of the first embodiment of the present invention has a structure in which the electrode 43 is integrated with the electrode 42 and the negative electrode of the power supply 53 and the positive electrode of the power supply 52 are connected to the electrode 42, so that the power supply 53 and the power supply 52 are connected in series. In the lithium recovery device 1C, the power supply 52 and the power supply 53 are preferably floating power supplies.

According to the lithium recovery device 1C with this structure, the voltages applied between both surfaces of the ion exchange membranes 31 and 33 can be set individually as in the lithium recovery device 1B, the number of components can be reduced, and the processing tank 7 can be shortened in the partitioning direction because there is no need to provide the two electrodes at a sufficient distance in the supply chamber 12 as in the lithium recovery device 1B.

In the lithium recovery devices 1, 1B, and 1C according to the above-described embodiment and the second and third modifications, the electrode 44 and the second electrode 45 provided in the alkali recovery chamber 13 may be integrated with each other. For example, the electrode 44 may be integrated with the second electrode 45 in contact with the surface of the electrolyte membrane 2 on the supply chamber 12 side. In this case, as will be described later in a fourth embodiment, the voltages V2 and V1 of the power supply 52 and the power supply 51 connected in series are set to have an appropriate relationship.

[Second Embodiment]

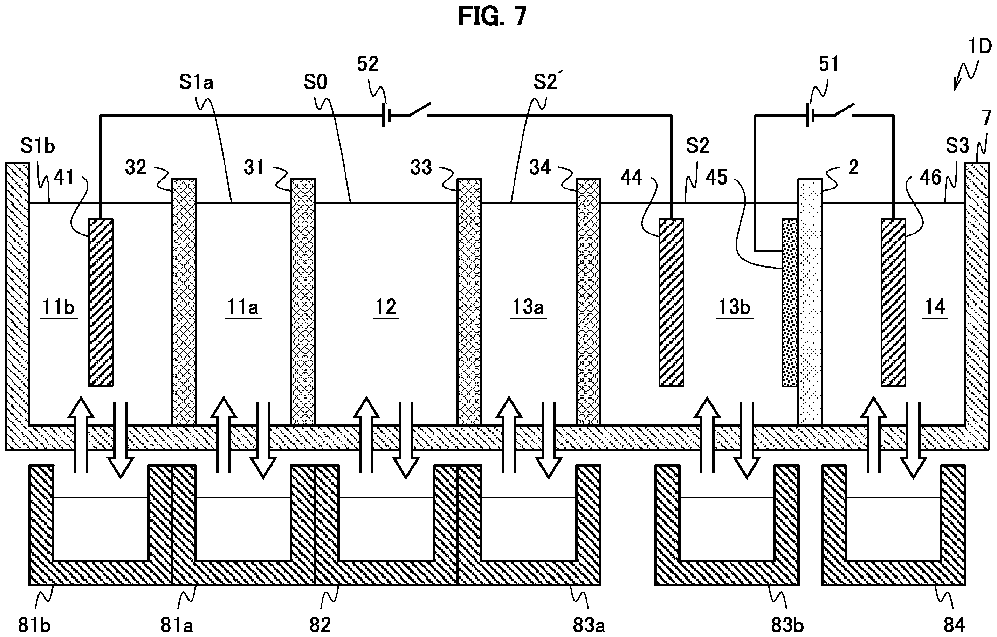

A lithium recovery device according to the present invention may include two or more cation-conductive ion exchange membranes and/or two or more anion-conductive ion exchange membranes. Specifically, as shown in FIG. 7, a lithium recovery device 1D according to a second embodiment of the present invention includes a processing tank 7, ion exchange membranes 32, 31, 33, and 34 and an electrolyte membrane (lithium ion-conductive electrolyte membrane) 2 that partition the processing tank 7 into six chambers 11b, 11a, 12, 13a, 13b, and 14 in this order, electrodes 45 and 46 provided in contact with or facing the electrolyte membrane 2 in the chambers 13b and 14 partitioned by the electrolyte membrane 2, an electrode 41 provided in the chamber 11b, an electrode 44 provided away from the electrode 45 in the chamber 13, a $Li^+$ transfer power supply (first power supply) 51 connected between the electrodes 45 and 46, an ion transfer power supply (power supply) 52 connected between the electrodes 41 and 44, and circulation devices (circulation tanks and circulation units) 81b, 81a, 82, 83a, 83b, and 84 provided for the respective chambers 11b, 11a, 12, 13a, 13b, and 14. Both the chambers 11b and 11a are acid recovery chambers as in the case of chamber 11 in the lithium recovery device 1 according to the first embodiment, and store acid recovery aqueous solutions S1b and S1a. The chamber 13b is an alkali recovery chamber that stores an alkali recovery aqueous solution S2 as in the case of the chamber 13 in the lithium recovery device 1 according to the first embodiment 1. The chamber 13a is a primary alkali recovery chamber (alkali recovery chamber) at a previous stage of the alkali recovery chamber 13b and stores an alkali recovery aqueous solution S2'. As compared with the lithium recovery device 1 according to the first embodiment shown in FIG. 1, the lithium recovery device 1D according to the present embodiment has a structure in which the ion exchange membranes 32 and 34 are added, the two acid recovery chambers are arranged side by side, and the two alkali recovery chambers are arranged side by side.

The ion exchange membrane 32 is provided on the acid recovery chamber 11b side of the supply chamber 12 as in the case of the ion exchange membrane 31, and conducts at least one kind of anions contained in the Li supply aqueous solution S0. This at least one kind of anions preferably includes anions other than hydroxide ions ($OH^-$) and preferably includes anions that the ion exchange membrane 31 can conduct. The ion exchange membrane 32 is provided on a side of the ion exchange membrane 31 opposite to the supply chamber 12 and partitions the processing tank 7 into the chamber 11b and the chamber 11a. As the ion exchange membrane 32 thus arranged, a membrane endurable under neutral to acidic conditions can be used. For the ion exchange membrane 32, it is preferable to use a monovalent anion selectively permeable ion exchange membrane, a bipolar monovalent ion selectively permeable ion exchange membrane transmitting monovalent ions, or the like.

The ion exchange membrane 34 is provided on the alkali recovery chamber 13b side of the supply chamber 12 as in the case of the ion exchange membrane 33, and conducts cations including at least $Li^+$. The ion exchange membrane 34 is provided on a side of the ion exchange membrane 33 opposite to the supply chamber 12 and partitions the processing tank 7 into the chamber 13b and the chamber 13a. For the ion exchange membrane 34, the same ion exchange membrane as the ion exchange membrane 33 may be used. Alternatively, a cation exchange membrane that conducts cations including multivalent ions may be used for one of the ion exchange membranes 33 and 34, while a monovalent cation selectively permeable ion exchange membrane or a bipolar monovalent ion selectively permeable ion exchange membrane may be used for the other ion exchange membrane.

A lithium recovery method by the lithium recovery device 1D according to the present embodiment can be carried out in the same manner as in the lithium recovery method according to the first embodiment (see FIG. 2). According to the lithium recovery device 1D, since the multiple cation-conductive ion exchange membranes 33 and 34 are provided on the Li recovery chamber 14 side of the supply chamber 12, anions from the Li supply aqueous solution S0 are blocked more effectively, so that the alkali recovery aqueous solution S2 in contact with the Li$^+$ supply side surface of the electrolyte membrane 2 can be made to have a much higher pH. In addition, since the monovalent ion selectively permeable ion exchange membrane 32 is provided on the higher potential side of the anion-conductive ion exchange membrane 31, it is possible to recover SO$_4^{2-}$ in each of the acid recovery chamber 11a and the circulation tank of the circulation device 81a, that is, to recover the acid recovery aqueous solution S1a as a sulfuric acid. Moreover, it is possible to recover monovalent anions such as NO$_3^-$, Cl$^-$, and F$^-$ in each of the acid recovery chamber 11b and the circulation tank of the corresponding circulation device 81b.

Here, many of monovalent cation selectively permeable ion exchange membranes and bipolar monovalent ion selectively permeable ion exchange membranes (collectively referred to as monovalent ion selectively permeable ion exchange membranes as needed) do not have sufficient resistance to strong alkali. Meanwhile, it is preferable that the alkali recovery aqueous solution S2 in contact with the Li$^+$ supply side surface of the electrolyte membrane 2 have a high pH. For this reason, in order to migrate only monovalent cations to the alkali recovery aqueous solution S2 to achieve little precipitation, the lithium recovery device 1D uses a monovalent ion selectively permeable ion exchange membrane as the ion exchange membrane 33. Meanwhile, as the ion exchange membrane 34, a cation exchange membrane having high alkali resistance is preferably used. During operation, before the cation concentration in the alkali recovery aqueous solution S2' in the primary alkali recovery chamber 13a becomes high, the pH of the alkali recovery aqueous solution S2' is adjusted to a predetermined value or lower by, for example, migrating cations including Li$^+$ to the alkali recovery aqueous solution S2 in the alkali recovery chamber 13b or recovering monovalent cations other than Li$^+$ in the circulation device 83a. Alternatively, it is preferable to add an acid to the alkali recovery aqueous solution S2' in advance in order to prevent the pH from becoming high. The acid to be added to the alkali recovery aqueous solution S2' is one that does not precipitate Li$^+$, and an acid may be selected from the same acids as those contained in the Li supply aqueous solution S0, for example, a nitric acid, a sulfuric acid, a hydrochloric acid, and so on. With these structure using the monovalent ion selectively permeable ion exchange membrane with low alkali resistance, the alkali recovery aqueous solution S2 in contact with the supply side surface of the electrolyte membrane 2 can be controlled to cause very little precipitation, thereby preventing the Li$^+$ migration to the Li recovery aqueous solution S3 from being blocked, and can be made to have a much higher pH, thereby further enhancing the Li$^+$ mobility.

(Modifications)

The lithium recovery device 1D according to the present embodiment may also use a cation exchange membrane that conducts cations including multivalent ions as the ion exchange membrane 33 and a monovalent ion selectively permeable ion exchange membrane as the ion exchange membrane 34. In this structure, multivalent ions among cations contained in the Li supply aqueous solution S0 can be recovered by the circulation device 83a from the alkali recovery aqueous solution S2' in the primary alkali recovery chamber 13a. However, during operation, the alkali recovery aqueous solutions S2' and S2 in contact with both sides of the ion exchange membrane 34 have to be adjusted not to have a high pH. To this end, the lithium recovery device 1D may include three alkali recovery chambers on the Li recovery chamber 14 side of the supply chamber 12a by arranging three ion exchange membranes, namely, a cation exchange membrane, a monovalent ion selectively permeable ion exchange membrane, and a cation exchange membrane in this order. The aqueous solutions in the first and second alkali recovery chambers from the supply side are adjusted with addition of an acid so as to be prevented from becoming strongly alkaline. With this structure, the aqueous solution in contact with the electrolyte membrane 2 in the third alkali recovery chamber can be made to have a high pH. In addition, the Li supply aqueous solution S0 can be prevented from generating precipitate and greatly changing in pH because multivalent cations among ions contained therein do not remain unevenly. Moreover, from the aqueous solution in the first alkali recovery chamber, only multivalent cations can be precipitated and recovered.

In the lithium recovery device according to the above-described embodiment, the two power supplies separately form the potential difference between both surfaces of each of the four ion exchange membranes and the potential difference between both surfaces of the electrolyte membrane. Instead, the potential difference may be formed collectively for the four ion exchange membranes and the electrolyte membrane, or for every one or every two to three of the ion exchange membranes as in the case of the lithium recovery devices 1A, 1B, and 1C according to the modifications of the first embodiment (see FIGs. 3 to 6). In the case where an electrode is provided in the primary alkali recovery chamber 13a or the like and an acid is added to the alkali recovery aqueous solution in this chamber, it is preferable to avoid a hydrochloric acid, which tends to generate a gas through an oxidation reaction and impairs the catalytic activity of the platinum electrode.

[Third Embodiment]

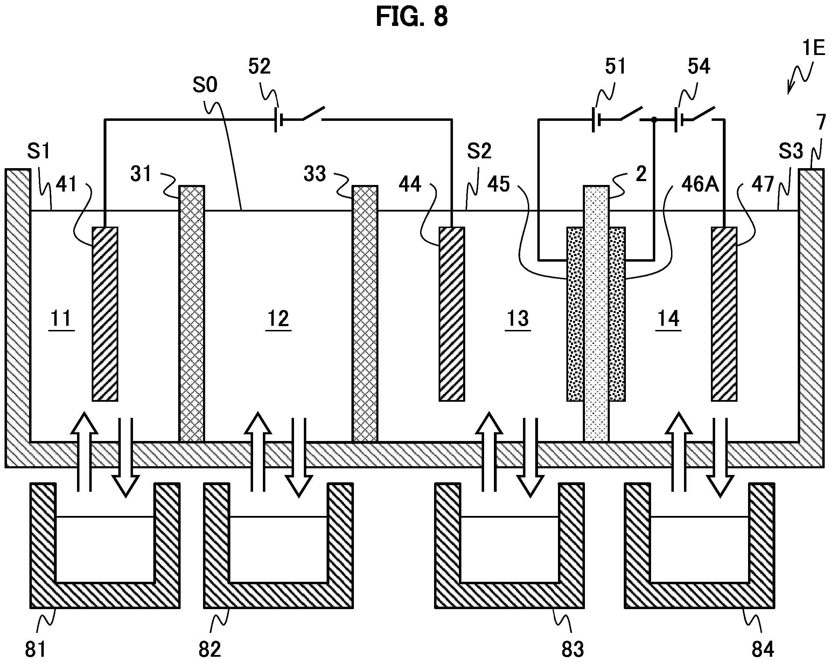

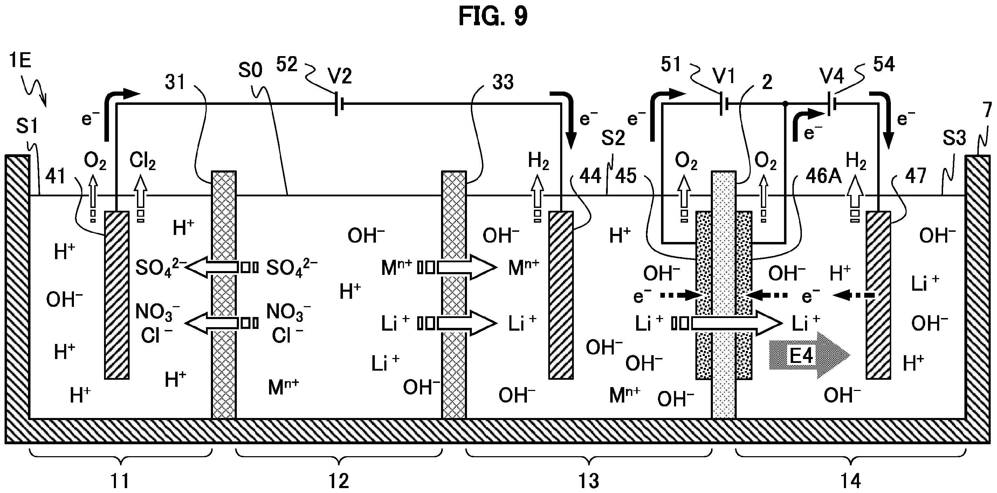

In the lithium recovery device according to the first embodiment, it is preferable to keep the voltage applied between both surfaces of the lithium ion-conductive electrolyte membrane low enough to form the potential difference at which the lithium ion-conductive electrolyte membrane will not exhibit electron conductivity. For this reason, the following structure is employed which can enhance the $Li^+$ mobility by increasing the voltage while preventing the lithium ion-conductive electrolyte membrane from exhibiting electron conductivity. Hereinafter, a lithium recovery device and a lithium recovery method according to a third embodiment of the present invention will be described in reference to FIGs. 8 and 9.

(Lithium Recovery Device)

As shown in FIG. 8, a lithium recovery device 1E according to the third embodiment of the present invention includes a processing tank 7, ion exchange membranes 31 and 33 and an electrolyte membrane (lithium ion-conductive electrolyte membrane) 2 that partition the processing tank 7 into four chambers 11, 12, 13, and 14 in this order, electrodes 45 and 46A provided in contact with the electrolyte membrane 2 in the respective chambers 13 and 14 partitioned by the electrolyte membrane 2, an electrode 41 provided in the chamber 11, an electrode 44 provided away from the second electrode 45 in the chamber 13, a sub-electrode 47 provided away from the electrolyte membrane 2 and the first electrode 46A in the Li recovery chamber 14, a $Li^+$ transfer power supply 51 connected between the electrodes 45 and 46A, an ion transfer power supply 52 connected between the electrodes 41 and 44, a sub-power supply 54 connected between the electrodes 46A and 47 with the first electrode 46A set positive, and circulation devices (circulation tanks and circulation units) 81, 82, 83, and 84 provided for the respective chambers 11, 12, 13, and 14. Each of the power supplies 51 and 52 is connected with its Li recovery chamber 14 side set negative. As compared with the lithium recovery device 1 according to the first embodiment shown in FIG. 1, the lithium recovery device 1E according to the present embodiment has a structure in which the first electrode 46A is provided in contact with electrolyte membrane 2 in the Li recovery chamber 14, the sub-electrode 47 provided away from the first electrode 46A and the electrolyte membrane 2 in the Li recovery chamber 14 is added, and the sub-power supply 54 connected between the electrodes 46A and 47 is added.
The first electrode 46A is an electrode that functions in pair with the second electrode 45 to apply a voltage between both surfaces of the electrolyte membrane 2 and that makes the surface of the electrolyte membrane 2 on the Li recovery chamber 14 side have a relatively high potential in the Li recovery aqueous solution S3. For this purpose, the first electrode 46A has a porous structure and is provided in contact with the surface of the electrolyte membrane 2 on the Li recovery chamber 14 side. As in the case of the first electrode 46A in the lithium recovery device 1A according to the first modification of the first embodiment (see FIG. 3), the first electrode 46A is made of an electrode material that has electron conductivity and is stable in the Li recovery aqueous solution S3 even under voltage application. Moreover, the material preferably has catalytic activity for the reaction of Formula (1) below and the reaction of Formula (3) below. As such an electrode material for the electrode 46A, for example, platinum (Pt) is preferable.

[Chem. 9]

$$2OH^- \rightarrow H_2O + \frac{1}{2}O_2 \uparrow + 2e^- \quad \cdots (1)$$

$$Li^+(electrolyte) \rightarrow Li^+ \qquad \cdots (3)$$

The sub-electrode 47 is an electrode that forms a potential lower than that of the surface of the electrolyte membrane 2 in the Li recovery aqueous solution S3 and that functions in pair with the second electrode 45 to apply a voltage. To this end, the sub-electrode 47 is arranged in the Li recovery chamber 14 so as to be out of contact with the electrolyte membrane 2 and the first electrode 46A and facing the first electrode 46A, and is preferably arranged in parallel with the first electrode 46A. As will be described later, the sub-electrode 47 is preferably arranged as close as possible to the first electrode 46A to the extent that short-circuiting can be avoided. The sub-electrode 47 preferably has a shape such as a mesh shape so as to have a large contact area with the Li recovery aqueous solution S3. The sub-electrode 47 is made of a material that has electron conductivity and is stable in the Li recovery aqueous solution S3 even under voltage application. Moreover, the material preferably has catalytic activity for the reaction of Formula (4). Therefore, the sub-electrode 47 may have the same structure as in the first electrode 46 in the lithium recovery device 1 according to the first embodiment.

[Chem. 10]     $2H_2O + 2e^- \rightarrow 2OH^- + H_2 \uparrow \dots (4)$

The sub-power supply 54 is a direct-current power supply as in the case of the Li$^+$ transfer power supply 51, and has its positive electrode connected to the first electrode 46A and its negative electrode connected to the sub-electrode 47. In sum, the sub-power supply 54 is connected to the negative electrode of the Li$^+$ transfer power supply 51 in series. The sub-power supply 54 applies a voltage V4 to form a potential lower than that of the surface of the electrolyte membrane 2 in the Li recovery aqueous solution S3, thereby preventing the electrolyte membrane 2 from exhibiting electron conductivity.

(Lithium Recovery Method)

The lithium recovery method according to the third embodiment of the present invention will be described in reference to FIG. 9. The lithium recovery method according to the present embodiment is carried out as follows by the lithium recovery device 1E according to the third embodiment shown in FIG. 8. In FIG. 9, the circulation devices 81 to 84 are omitted.

In the present embodiment, the application of the voltage V1 by the Li$^+$ mobile power supply 51 and the application of the voltage V4 by the sub-power supply 54 are performed simultaneously. As in the case of the first embodiment, it is preferable to apply only the voltage V2 from the ion transfer power supply 52 if necessary immediately after the start of operation or the like, thereby migrating anions and cations in the Li supply aqueous solution S0 to the aqueous solutions S1 and S2, respectively, and then start applying the voltages V1 and V4 after an amount of Li$^+$ contained in the alkali recovery aqueous solution S2 reaches a certain amount.

In the lithium recovery device 1E, the Li$^+$ transfer power supply 51 and the sub-power supply 54 connected in series can be regarded as one power supply (referred to as the power supply 51-54). The power supply 51-54 applies, to the second electrode 45, a positive voltage (V1+V4) relative to the sub-electrode 47. Then, the reaction of Formula (1) below occurs near the second electrode 45. With this reaction, the reaction of Formula (2) below in which Li$^+$ in the alkali recovery aqueous solution S2 migrates into the electrolyte membrane 2 occurs near the second electrode 45, in other words, the surface of the electrolyte membrane 2.

[Chem. 11]

$$2OH^- \rightarrow H_2O + \frac{1}{2}O_2 \uparrow + 2e^- \cdots (1)$$

$$Li^+ \rightarrow Li^+(electrolyte) \qquad \cdots (2)$$

Meanwhile, in the Li recovery chamber 14 in which the first electrode 46A and the sub-electrode 47 are arranged, the following reactions occur. Near the sub-electrode 47, $H_2O$ in the Li recovery aqueous solution S3 is supplied with electrons e$^-$ with the application of the voltage (V1+V4) by the power supply 51-54 to cause the reaction of Formula (4) below, generating $H_2$ and OH$^-$. At the same time, the sub-power supply 54 applies, to the first electrode 46A, the voltage V4 that is positive relative to the sub-electrode 47 and that is at a predetermined level based on the voltage V1. Then, near the first electrode 46A, OH$^-$ in the Li recovery aqueous solution S3 causes the reaction of Formula (1) below to release electrons e$^-$ to the first electrode 46A, generating $H_2O$ and $O_2$. Due to a difference between the applied voltages, this reaction is slower than the reaction of Formula (4) below near the sub-electrode 47. Therefore, in the Li recovery aqueous solution S3, OH$^-$ increases by a combination of the reaction of Formula (4) below and the reaction of Formula (1) below. With this increase, to keep a charge balance, the reaction of Formula (3) below in which Li$^+$ in the electrolyte membrane 2 migrates occurs near the surface of the electrolyte membrane 2, in other words, the first electrode 46A. Also in the Li recovery aqueous solution S3, a charge imbalance occurs due to a decrease in H+ with the reaction of Formula (4) below (4) near the sub-electrode 47 and an excess of cations with the reaction of Formula (1) below and the reaction of Formula (3) below near the first electrode 46A. To solve this imbalance, Li$^+$ moves quickly from the vicinity of the first electrode 46A to the vicinity of the sub-electrode 47. The relative relationship between the levels of the voltages V1 and V4 will be described later.

[Chem. 12]

$$2H_2O + 2e^- \rightarrow 2OH^- + H_2 \uparrow \cdots (4)$$

$$2OH^- \rightarrow H_2O + \frac{1}{2}O_2 \uparrow + 2e^- \cdots (1)$$

$$Li^+(electrolyte) \rightarrow Li^+ \qquad \cdots (3)$$

In the present embodiment, with the application of the voltage V4, a potential gradient which is positive near the first electrode 46A and is negative near the sub-electrode 47 is generated in the Li recovery aqueous solution S3. Then, electrons e⁻ supplied to the Li recovery aqueous solution S3 from the sub-electrode 47 migrate from the first electrode 46A on the surface of the electrolyte membrane 2 to the positive electrode of the sub-power supply 54, so that the potential of the first electrode 46A, that is, the surface of the electrolyte membrane 2 is maintained high approximately at an $O_2$ evolution potential. Since the $O_2$ evolution potential is higher than the reduction ($Ti^{4+} + e^- \rightarrow Ti^{3+}$ when the Electrolyte membrane 2 is made of LLTO) potential of any kind of metal ions constituting the electrolyte membrane 2, the electrolyte membrane 2 does not conduct electrons e⁻ irrespective of the potential difference between both surfaces thereof. Therefore, the voltage V1 can be set to a high voltage equal to or higher than the applied voltage that causes the electrolyte membrane 2 to reach the reduction potential of at least one kind of metal ions constituting the electrolyte membrane 2. In other words, if such a high voltage V1 were applied without application of the voltage V4, the metal ions would be reduced in the electrolyte membrane 2 taking in electrons e⁻ from its surface on the negative electrode side (the Li recovery chamber 14 side). However, as described above, in the present embodiment, the application of the voltage V4 prevents the electrolyte membrane 2 from reaching the reduction potential of the metal ions, and thereby prevents the electrolyte membrane 2 from conducting electrons e⁻. Also in the Li recovery aqueous solution S3, due to the above potential gradient, Li⁺ is attracted to the vicinity of the sub-electrode 47 and accordingly the Li⁺ concentration near the surface of the electrolyte membrane 2 decreases. As a result, a large chemical potential difference according to the Li⁺ concentration gradient occurs between both surfaces of the electrolyte membrane 2, which promotes the Li⁺ movement between the lattice defect sites in the electrolyte membrane 2.

As described in the first embodiment, the Li⁺ movement in the electrolyte membrane 2 becomes faster, as the potential gradient in the electrolyte membrane 2 becomes greater, in other words, the voltage V1 of the Li⁺ transfer power supply 51 becomes higher. The Li⁺ movement in the electrolyte membrane 2 also becomes faster as the Li⁺ concentration gradient in the electrolyte membrane 2 becomes greater. Therefore, as an electric field E4 between the first electrode 46A and the sub-electrode 47 in the Li recovery aqueous solution S3 becomes stronger, in other words, as the voltage V4 of the sub-power supply 54 becomes higher, the reaction of Formula (3) occurs more easily. As a result, the Li⁺ in the electrolyte membrane 2 can be migrated faster to the Li recovery aqueous solution S3. Moreover, as the voltage V1 becomes higher, the difference between the reaction speeds of the reaction of Formula (4) and the reaction of Formula (1) becomes larger in the Li recovery aqueous solution S3, which makes the increase of OH⁻ faster and eventually makes the reaction of Formula (3) faster. As a result, Li⁺ in the electrolyte membrane 2 can be migrated to the Li recovery aqueous solution AS.

If the voltage V4 is not sufficiently high relative to the voltage V1, an electric current flows from the first electrode 46A to the negative electrode of the Li⁺ transfer power supply 51, in other words, the first electrode 46A receives electrons e⁻, which cause the reaction of Formula (4) nearby to generate $H_2$. As a result, the electrolyte membrane 2 may exhibit electron conductivity. To prevent this, the voltage V4 is set to such a level that no electric current may flow from the first electrode 46A to the negative electrode of the Li⁺ transfer power supply 51. However, as the voltage V4 becomes higher around this level, the electric current flowing from the sub-power supply 54 to the first electrode 46A increases, and the generation of $O_2$ near the first electrode 46A (the reaction of Formula (1)) and the generation of $H_2$ near the sub-electrode 47 (the reaction of Formula (4)) increase more than the increase in the Li⁺ migration amount, resulting in a decrease in the energy efficiency. To prevent this, for example, an ammeter may be connected in series to the first electrode 46A (the ammeter is connected between the first electrode 46A and a connection point between the Li⁺ mobile power supply 51 and the sub-power supply 54), and the voltages V1 and V4 may be applied while the electric current is being measured (see Patent Literature 4).

(Modifications)

The lithium recovery device according to the above-described embodiment may include an ion transfer power supply that applies a voltage between both surfaces of the ion exchange membranes for each ion exchange membrane, as in the case of the lithium recovery devices 1B and 1C according to the second and third modifications of the first embodiment (see FIGs. 5 and 6). The lithium recovery device may include two or more anion-conductive ion exchange membranes and two or more cation-conductive ion exchange membranes as in the case of the lithium recovery device 1D according to the second embodiment (see FIG. 7).

[Fourth Embodiment]

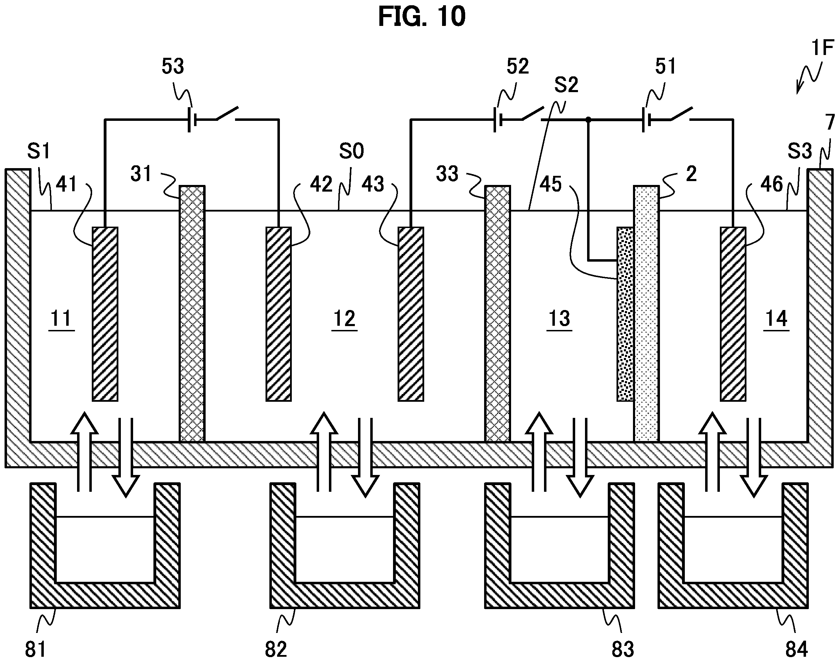

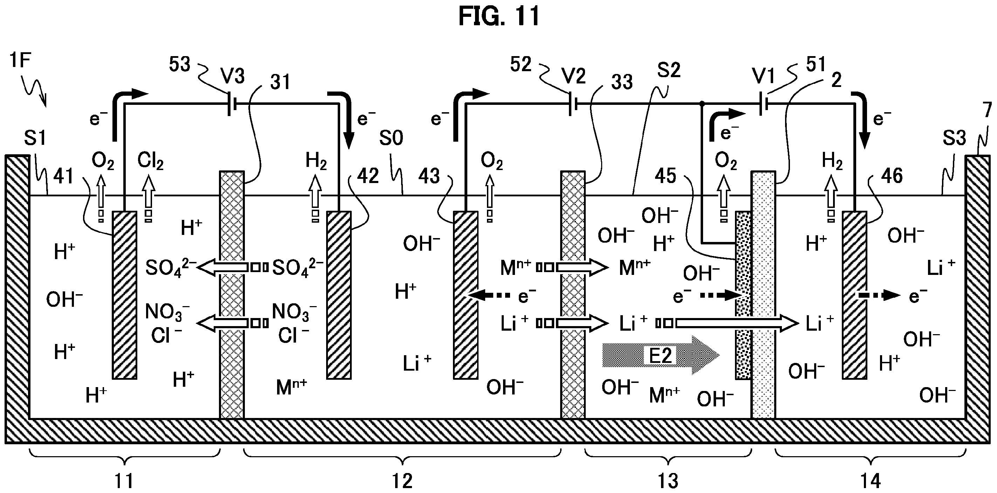

The lithium recovery from used lithium-ion secondary batteries and the like is required to achieve a recovery rate as close as possible to 100%. However, in the lithium recovery devices according to the aforementioned embodiments, as the $Li^+$ concentration in the dissolution solution of waste batteries serving as the Li source decreases with the progress of the lithium recovery, the $Li^+$ migration amount to the alkali recovery aqueous solution on the supply side of the electrolyte membrane decreases, and the $Li^+$ concentration in the alkali recovery aqueous solution decreases. As a result, the $Li^+$ mobility in the electrolyte membrane decreases regardless of the voltage applied between both surfaces of the electrolyte membrane. In an attempt to maintain the $Li^+$ concentration in the alkali recovery aqueous solution at a certain level or higher, for example, the voltage application between both surfaces of the electrolyte membrane may be frequently stopped to migrate cations to the alkali recovery aqueous solution or the like. However, such countermeasure reduces the productivity. The same applies to the case where seawater having a low $Li^+$ concentration is used as the Li source. To address this, in order that the $Li^+$ mobility can be enhanced corresponding to the applied voltage between both surfaces of the electrolyte membrane, a lithium recovery device is structured as follows. Hereinafter, a lithium recovery device and a lithium recovery method according to a fourth embodiment of the present invention will be described in reference to FIGs. 10 and 11.

(Lithium Recovery Device)

As shown in FIG. 10, a lithium recovery device 1F according to the fourth embodiment of the present invention includes a processing tank 7, ion exchange membranes 31 and 33 and an electrolyte membrane (lithium ion-conductive electrolyte membrane) 2 that partition the processing tank 7 into four chambers 11, 12, 13, and 14 in this order, a second electrode 45 and a first electrode 46 provided in the respective chambers 13 and 14 partitioned by the electrolyte membrane 2, the second electrode 45 being in contact with the electrolyte membrane 2, the first electrode 46 being in contact with or facing the electrolyte membrane 2, an electrode 41 provided in the acid recovery chamber 11, electrodes 42 and 43 provided in the supply chamber 12, the electrode 42 facing the ion exchange membrane 31, the electrode 43 being away from the electrode 42 and facing the ion exchange membrane 33, a $Li^+$ transfer power supply 51 connected between the electrodes 45 and 46, an ion transfer power supply 52 connected between the electrodes 43 and 45, an ion transfer power supply 53 connected between the electrodes 41 and 42, and circulation devices (circulation tanks and circulation units) 81, 82, 83, and 84 provided for the respective chambers 11, 12, 13, and 14. Each of the power supplies 51, 52, and 53 is connected with its Li recovery chamber 14 side set negative. As compared with the lithium recovery device 1 according to the first embodiment shown in FIG. 1, the lithium recovery device 1F according to the present embodiment has a structure in which the electrode 44 on the Li recovery chamber 14 side of the ion exchange membrane 33 is integrated with the second electrode 45 in the same chamber 13, the electrodes 42 and 43 are added to the supply chamber 12 and the ion transfer power supplies 53 and 52 to each individually apply a voltage between both surfaces of the corresponding one of the ion exchange membranes 31 and 33 are included. In other words, as compared with the lithium recovery device 1B according to the second modification of the first embodiment shown in FIG. 5, the lithium recovery device 1F has the structure in which the electrode 44 is integrated with the second electrode 45.

The components in the lithium recovery device 1F according to the present embodiment may have the same structures as in the components in the lithium recovery devices 1 and 1B according to the first embodiment and the modification thereof. Further, in the present embodiment, the electrode 43 is provided to function in pair with the second electrode 45 to apply a voltage for generating a potential difference between both surfaces of the ion exchange membrane 33, and forming a potential gradient in the alkali recovery aqueous solution S2 in the alkali recovery chamber 13 in which the second electrode 45, that is, the surface of the electrolyte membrane 2 is lower in potential than the side of the supply chamber 12 in which the electrode 43 is arranged. The electrode 43 and the second electrode 45 are preferably arranged in parallel to each other and their distance is preferably as short as possible. To this end, it is preferable that the distance between the ion exchange membrane 33 and the electrolyte membrane 2, in other words, the alkali recovery chamber 13 be as short as possible in the partitioning direction of the processing tank 7 (the right-left direction in FIG. 10), and it is preferable to arrange the electrode 43 as close as possible to the ion exchange membrane 33.

(Lithium Recovery Method)

The lithium recovery method according to the fourth embodiment of the present invention will be described in reference to FIG. 11. The lithium recovery method according to the present embodiment is carried out as follows by the lithium recovery device 1F according to the fourth embodiment shown in FIG. 10. In FIG. 11, the circulation devices 81 to 84 are omitted.

In the present embodiment, when the Li$^+$ transfer power supply 51 applies a voltage V1, the ion transfer power supply 52 concurrently applies a voltage V2. As in the case of the first embodiment, it is preferable to drive both the ion transfer power supplies 52 and 53 or only the ion transfer power supply 52 as needed immediately after the start of operation or the like and then start applying the voltage V1 after a certain amount of Li$^+$ is migrated from the Li supply aqueous solution S0 to the alkali recovery aqueous solution S2.

In the lithium recovery device 1F, the ion transfer power supply 52 and the Li$^+$ transfer power supply 51 connected in series can be regarded as one power supply (referred to as the power supply 52-51). The power supply 52-51 applies, to the electrode 43, a positive voltage (V2+V1) relative to the first electrode 46. At the same time, the Li$^+$ transfer power supply 51 applies, to the second electrode 45, the positive voltage V1 relative to the first electrode 46. Then, near the electrode 43, OH$^-$ in the Li supply aqueous solution S0 causes the reaction of Formula (1) below to generate H$_2$O and O$_2$ and release electrons e$^-$ to the electrode 43. In the case where the Li supply aqueous solution S0 contains Cl$^-$, Cl$^-$ additionally causes the reaction of Formula (7) below near the electrode 43 to generate Cl$_2$. In the Li supply aqueous solution S0, as OH$^-$ decreases, cations such as Li$^+$ and M$^{n+}$ migrate to the alkali recovery aqueous solution S2 in order to keep a charge balance. In the alkali recovery aqueous solution S2, further, OH$^-$ in the alkali recovery aqueous solution S2 causes the reaction of Formula (1) below near the second electrode 45 to generate H$_2$O and O$_2$ and release electrons e$^-$ to the second electrode 45. As a result, as OH$^-$ decreases, the reaction of Formula (2) below in which Li$^+$ in the alkali recovery aqueous solution S2 migrates into the electrolyte membrane 2 occurs on the second electrode 45, in other words, the surface of the electrolyte membrane 2 in order to keep a charge balance.

[Chem. 13]

$$2OH^- \rightarrow H_2O + \frac{1}{2}O_2 \uparrow +2e^- \cdots (1)$$

$$2Cl^- \rightarrow Cl_2 \uparrow +2e^- \qquad \cdots (7)$$

$$Li^+ \rightarrow Li^+(electrolyte) \qquad \cdots (2)$$

Meanwhile, as in the case of the first embodiment, near the first electrode 46, H$_2$O in the Li recovery aqueous solution S3 is supplied with electrons e$^-$ to cause the reaction of Formula (4) below to generate H$_2$ and OH$^-$. Then, as OH$^-$ increases, the reaction of Formula (3) below in which Li$^+$ in the electrolyte membrane 2 migrates to the Li recovery aqueous solution S3 occurs in order to keep a charge balance.

[Chem. 14]

$$2H_2O + 2e^- \rightarrow 2OH^- + H_2 \uparrow \cdots (4)$$

$$Li^+(electrolyte) \rightarrow Li^+ \qquad \cdots (3)$$

Here, in the alkali recovery aqueous solution S2, with the application of the voltage V2, a potential gradient is formed in which the second electrode 45, in other words, the surface of the electrolyte membrane 2 is lower in potential than the supply chamber 12 side. Then, cations Li$^+$ are attracted to the surface of the electrolyte membrane 2 by electrostatic attraction and are relatively highly concentrated near the above surface. Therefore, even if the Li$^+$ concentration in the alkali recovery aqueous solution S2 is low, Li$^+$ can be sufficiently distributed to the surface of the electrolyte membrane 2. Moreover, a Li$^+$ concentration gradient that is great relative to the Li$^+$ concentration in the alkali recovery aqueous solution S2 is formed between both surfaces of the electrolyte membrane 2, leading to the occurrence of a large chemical potential difference, which promotes the movement of Li$^+$ between lattice defect sites in the electrolyte membrane 2.

In the present embodiment, as in the case of the first embodiment, as the voltage V1 becomes higher or the the an electric field E2 generated in the alkali recovery aqueous solution S2 by the voltage V2 becomes stronger, the Li$^+$ mobility in the electrolyte membrane 2 increases. The voltage V1 can be set in the same way as in the first embodiment. Meanwhile, if the voltage V2 is increased to make the electric field E2 strong and reaches a voltage at which electrolysis of water occurs, the reaction of Formula (4) below occurs to generate H$_2$ near the second electrode 45 in the alkali recovery aqueous solution S2. In this reaction, the second electrode 45 receives electrons e$^-$ and the electrons e$^-$ are moved in the direction opposite to the direction in the aforementioned reaction of Formula (1) below near the second electrode 45 shown in FIG. 11. When the second electrode 45, in other words, the surface of the electrolyte membrane 2 on the supply chamber 12 side reaches a H$_2$ evolution potential, the electrolyte membrane 2 reaches the reduction potential of some of the metal ions constituting the electrolyte membrane 2 and consequently exhibits electron conductivity, irrespective of the potential difference between both surfaces of the electrolyte membrane 2 by the application of the voltage V1. As a result, the energy efficiency in the $Li^+$ movement in the electrolyte membrane 2 sharply drops as described above. To avoid this, the voltage V2 is set lower than a voltage at which $H_2$ evolution takes place near the second electrode 45 (see Patent Literature 5). The $H_2$ evolution voltage is actually about the theoretical voltage for the electrolysis of water under standard conditions (1.229 V, 25°C) or several hundred mV higher than that value, depending on the electrode performance that determines the electrode reaction overvoltage of each of both electrodes (the electrodes 43 and 45 for the voltage V2), the pH of the solution near both electrodes, and the like. Moreover, in the present embodiment, even though the voltage V2 is equal to or higher than the aforementioned value, if the voltage V1 is higher than the voltage V2 by a certain degree or more, the potential of the surface of the electrolyte membrane 2 on the supply chamber 12 side (the higher potential side) does not drop to the $H_2$ evolution potential or below, and $H_2$ is not generated.

[Chem. 15]

$$2H_2O + 2e^- \rightarrow 2OH^- + H_2 \uparrow \cdots (4)$$

$$2OH^- \rightarrow H_2O + \frac{1}{2}O_2 \uparrow + 2e^- \cdots (1)$$

Furthermore, when the voltage V2 is a certain degree higher than the potential difference between both surfaces of the electrolyte membrane 2, an electric current flows from the second electrode 45 to the negative electrode of the ion transfer power supply 52, in other words, the second electrode 45 receives electrons e⁻, and the reaction of Formula (4) occurs nearby to generate $H_2$. As result, the electrolyte membrane 2 exhibits electron conductivity. For this reason, the voltage V2 is preferably as high as possible within a range where no electric current flows from the second electrode 45 to the negative electrode of the ion transfer power supply 52. To this end, for example, an ammeter may be connected in series to the second electrode 45 (the ammeter is connected between the second electrode 45 and a connection point between the ion transfer power supply 52 and the $Li^+$ transfer power supply 51), and the voltages V1 and V2 may be applied while the electric current is being measured (see Patent Literature 5). In order to make the electric field E2 strong while controlling the voltage V2, it is preferable to arrange the ion exchange membrane 33, the electrolyte membrane 2, and the electrode 43 as described above. In the case where the ion transfer power supply 52 or the ion transfer power supply 52 and additionally the ion transfer power supply 53 are driven to migrate $Li^+$ from the Li supply aqueous solution S0 to the alkali recovery aqueous solution S2 while the voltage V1 is not being applied, the ion transfer power supply 52 may apply a voltage equal to or higher than the voltage at which electrolysis of water occurs.

(Modifications)

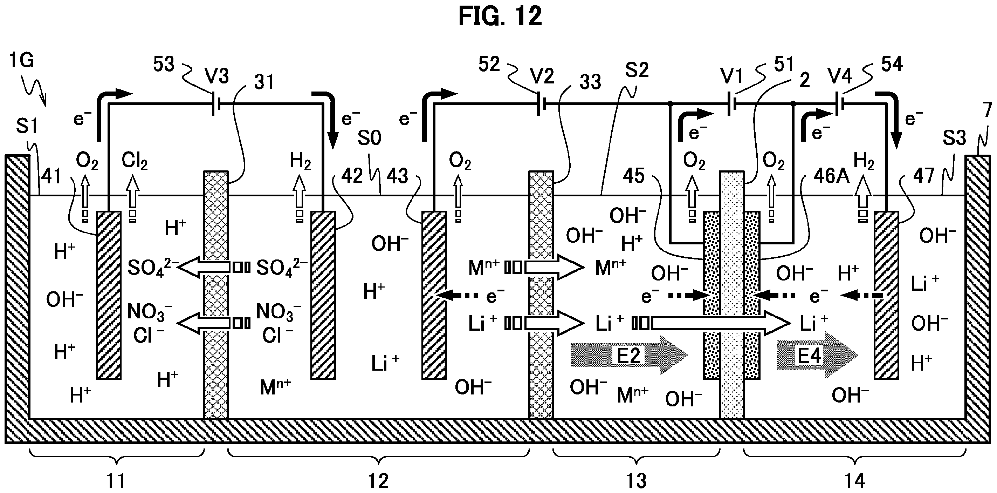

In the lithium recovery device according to the above-described embodiment, as in the third embodiment, the second electrode and the first electrode are placed in contact with both surfaces of the electrolyte membrane, the sub-power supply is connected in series to the negative electrode of the $Li^+$ transfer power supply connected between the first and second electrodes, and the sub-electrode connected to the negative electrode of the sub-power supply is provided in the Li recovery chamber, so that the potential difference between both surfaces of the electrolyte membrane can be increased and accordingly the $Li^+$ mobility in the electrolyte membrane can be enhanced. Hereinafter, a lithium recovery device and a lithium recovery method according to a modification of the fourth embodiment of the present invention will be described in reference to FIG. 12.

As shown in FIG. 12, a lithium recovery device 1G according to the modification of the fourth embodiment of the present invention includes a processing tank 7, ion exchange membranes 31 and 33 and an electrolyte membrane (lithium ion-conductive electrolyte membrane) 2 that partition the processing tank 7 into four chambers 11, 12, 13, and 14 in this order, electrodes 45 and 46A provided in contact with the electrolyte membrane 2 in the respective chambers 13 and 14 partitioned by the electrolyte membrane 2, an electrode 41 provided in the acid recovery chamber 11, electrodes 42 and 43 provided in the supply chamber 12, the electrode 42 facing the ion exchange membrane 31, the electrode 43 being away from the electrode 42 and facing the ion exchange membrane 33, a sub-electrode 47 provided away from the electrolyte membrane 2 and the first electrode 46A in the Li recovery chamber 14, a $Li^+$ transfer power supply 51 connected between the electrodes 45 and 46, an ion transfer power supply 52 connected between the electrodes 43 and 45, an ion transfer power supply 53 connected between the electrodes 41 and 42, and a sub-power supply 54 connected between the electrodes 46A and 47 with the first electrode 46A set positive. The lithium recovery device 1G further includes circulation devices (circulation tanks and circulation units) 81, 82, 83, and 84 provided for the respective chambers 11, 12, 13, and 14 as in the case of the above-described embodiment (see FIG. 10). Each of the power supplies 51, 52, and 53 is connected with its Li recovery chamber 14 side set negative. As compared with the lithium recovery device 1F according to the fourth embodiment shown in FIG. 10, the lithium recovery device 1G according to the present modification has a structure in which the first electrode 46A is provided in contact with the electrolyte membrane 2 in the Li recovery chamber 14, and the sub-electrode 47 provided away from the first electrode 46A and the electrolyte membrane 2 in the Li recovery chamber 14 and the sub-power supply 54 connected between the electrodes 46A and 47 are added, as in the case of the lithium recovery device 1E according to the third embodiment shown in FIG. 8. Therefore, the components in the lithium recovery device 1G may have the same structures as in the components in the lithium recovery devices 1E and 1F according to the third and fourth embodiments.

In the lithium recovery method according to the present modification by the lithium recovery device 1G, when the $Li^+$ transfer power supply 51 applies a voltage V1, the ion transfer power supply 52 and the sub-power supply 54 concurrently apply voltages V2 and V4. As in the case of the above-described embodiment, it is preferable to drive both the ion transfer power supplies 52 and 53 or only the ion transfer power supply 52 as needed immediately after the start of operation or the like and then start applying the voltage V1 and the voltage V4 after a certain amount of $Li^+$ is migrated from the Li supply aqueous solution S0 to the alkali recovery aqueous solution S2.

In the lithium recovery device 1G, the ion transfer power supply 52, the $Li^+$ transfer power supply 51, and the sub-power supply 54 connected in series can be regarded as one power supply (referred to as the power supply 52-51-54). Similarly, the $Li^+$ transfer power supply 51 and the sub-power supply 54 can be regarded as one power supply (referred to as the power supply 51-54). The power supply 52-51-54 applies, to the electrode 43, a positive voltage (V2+V1+V4) relative to the sub-electrode 47. At the same time, the power supply 51-54 applies, to the second electrode 45, a positive voltage (V1+V4) relative to the sub-electrode 47. Then, as in the case of the above-described embodiment (see FIG. 11), the reaction of Formula (1) below occurs near each of the electrode 43 and the second electrode 45 and OH$^-$ in the aqueous solutions S0 and S2 generates $H_2O$ and $O_2$. In the case where the Li supply aqueous solution S0 contains Cl$^-$, Cl$^-$ additionally causes the reaction of Formula (7) below near the electrode 43 to generate $Cl_2$. As a result, in the alkali recovery aqueous solution S2, as OH$^-$ decreases, the reaction of Formula (2) below in which $Li^+$ migrates into the electrolyte membrane 2 occurs near the second electrode 45, in other words, the surface of the electrolyte membrane 2.

[Chem. 16]

$$2OH^- \rightarrow H_2O + \frac{1}{2}O_2 \uparrow + 2e^- \quad \cdots (1)$$

$$2Cl^- \rightarrow Cl_2 \uparrow + 2e^- \quad \cdots (7)$$

$$Li^+ \rightarrow Li^+(electrolyte) \quad \cdots (2)$$

Meanwhile, in the Li recovery chamber 14 in which the first electrode 46A and the sub-electrode 47 are arranged, the following reactions occur as in the case of the third embodiment. With the application of the voltage (V1+V4) by the power supply 51-54, $H_2O$ in the Li recovery aqueous solution S3 is supplied with electrons e$^-$ to cause the reaction of Formula (4) below, generating $H_2$ and OH$^-$. At the same time, the sub-power supply 54 applies, to the first electrode 46A, the positive voltage V4 relative to the sub-electrode 47, and OH$^-$ in the Li recovery aqueous solution S3 causes the reaction of Formula (1) below near the first electrode 46A to release electrons e$^-$ to the first electrode 46A and generate $H_2O$ and $O_2$. Since OH$^-$ is increased by a combination of the reaction of Formula (4) below and the reaction of Formula (1) below, the reaction of Formula (3) below in which $Li^+$ in the electrolyte membrane 2 migrates occurs near the surface of the electrolyte membrane 2, in other words, the first electrode 46A in order to keep a charge balance. Meanwhile, in the Li recovery aqueous solution S3, $Li^+$ moves quickly from the vicinity of the first electrode 46A to the vicinity of the sub-electrode 47. In the present modification, the voltage V2 is set based on the voltages V1 and V3 as will be described later.

[Chem. 17]

$$2H_2O + 2e^- \rightarrow 2OH^- + H_2 \uparrow \quad \cdots (4)$$

$$2OH^- \rightarrow H_2O + \frac{1}{2}O_2 \uparrow + 2e^- \quad \cdots (1)$$

$$Li^+(electrolyte) \rightarrow Li^+ \quad \cdots (3)$$

In the present modification, as in the case of the above-described embodiment, with the application of the voltage V2, Li$^+$ in the alkali recovery aqueous solution S2 is relatively highly concentrated near the surface of the electrolyte membrane 2. For this reason, even if the Li$^+$ concentration in the alkali recovery aqueous solution S2 is low, Li$^+$ can be diffused sufficiently to the surface of the electrolyte membrane 2. Moreover, as in the case of the third embodiment, with the application of the voltage V4, the potential of the surface of the electrolyte membrane 2 is maintained high approximately at the O$_2$ evolution potential, which prevents the electrolyte membrane 2 from conducting electrons e$^-$ irrespective of the potential difference between both surfaces of the electrolyte membrane 2, that is, the voltage V1, and Li$^+$ in the Li recovery aqueous solution S3 is attracted to the vicinity of the sub-electrode 47 to decrease the Li$^+$ concentration near the surface of the electrolyte membrane 2. Therefore, the Li$^+$ concentration gradient that is great relative to the Li$^+$ concentration in the alkali recovery aqueous solution S2 is formed between both surfaces of the electrolyte membrane 2, leading to the occurrence of a large chemical potential difference, which promotes the movement of Li$^+$ between lattice defect sites in the electrolyte membrane 2.

In the present modification, the voltage V1 can be set to a high voltage as in the third embodiment. Meanwhile, the voltage V2 is set to a voltage lower than the voltage at which H$_2$ evolution takes place near the second electrode 45 and the first electrode 46A, and is preferably as high as possible within the above range in order to increase the Li recovery speed. In the present modification, even though the voltage V2 has a value equal to or higher than a value based on the theoretical voltage of electrolysis of water (1.229 V) with the electrode performance of the electrodes 43 and 45 and the like taken into consideration as described in the fourth embodiment, when the voltage V4 is higher than the voltage V1 and the voltage V2 by a certain degree or more, the potentials of both surfaces of the electrolyte membrane 2 do not drop to the H$_2$ evolution potential or below, so that the voltage V1 and the voltage V2 can be set to even greater values. On the other hand, unless the voltage V4 is sufficiently higher than the voltage V1 and the voltage V2, an electric current may flow from the first electrode 46A to the negative electrode of the Li$^+$ transfer power supply 51 and the electrolyte membrane 2 may exhibit electron conductivity. However, as described in the third embodiment, if the voltage V4 is excessively high, the energy efficiency decreases. Therefore, an ammeter may be connected in series to the first electrode 46A as in the third embodiment, an ammeter may be further connected in series to the second electrode 45 as in the above-described embodiment, and the voltages V1, V2, and V4 may be applied while the electric currents are being measured (see Patent Literature 5).

In the lithium recovery devices according to the above-described embodiment and the modification thereof, the electrodes 42 and 43 and the ion transfer power supply 53 do not have to be included and the positive electrode of the ion transfer power supply 52 may be connected to the electrode 41. In this case, in order to make the electric field E2 generated in the alkali recovery aqueous solution S2 stronger relative to the voltage V2 applied by the ion transfer power supply 52, it is preferable that the distance between the ion exchange membrane 31 and ion exchange membrane 33 and the distance between the ion exchange membrane 33 and the electrolyte membrane 2, in other words, the supply chamber 12 and the alkali recovery chamber 13 be as short as possible in the partitioning direction of the processing tank 7 (the right-left direction in FIGs. 10 and 12) and that the electrode 41 be arranged as close as possible to the ion exchange membrane 31. In addition, the lithium recovery device may include two or more anion-conductive ion exchange membranes and two or more cation-conductive ion exchange membranes as in the case of the lithium recovery device 1D according to the second embodiment (see FIG. 7).

Example

Regarding the lithium recovery devices and the lithium recovery methods according to the present invention, the embodiments for carrying out the present invention are described above, and Example for confirming the effects of the present invention will be described below. However, the present invention should not be limited to this example and the aforementioned embodiments. Needless to say, various alternations, modifications, and the like based on the above and following description should be included in matters intended in the present invention.

[Experiment 1]

Regarding the lithium recovery device according to the third embodiment shown in FIG. 8, a lithium migration amount with voltage application for a certain time was measured.

(Fabrication of Lithium Recovery Device)

In the lithium recovery device, a La$_{0.57}$Li$_{0.29}$TiO$_3$ plate in a size of 50 mm × 50 mm with a thickness of 0.5 mm (lithium ion-conductive ceramic LLTO, manufactured by Toho Titanium Co., Ltd.) was used as the electrolyte membrane (reference sign 2 in FIG. 8). On center portions of both surfaces of this electrolyte membrane, electrodes in a lattice form with a thickness 10 μm, a width 0.5 mm, and a pitch 0.5 mm were formed in a size of 19.5 mm × 20.5 mm as the first and second electrodes (46A and 45 in FIG. 8), and lead wires connected to these electrodes for connection to the power supplies were further formed. The first electrode, the second electrode, and the lead wires were formed by screen-printing a Pt paste on the surfaces of the electrolyte membrane, followed by sintering for one hour at 900°C in an ambient atmosphere. An anion exchange membrane (NEOSEPTA ASE, manufactured by Astom Corporation, reference sign 31 in FIG. 8), a monovalent cation selectively permeable cation exchange membrane (CXP-S, manufactured by Astom Corporation, reference sing 33 in FIG. 8), and the electrolyte membrane with the electrodes and the like formed thereon were arranged in this order and installed in a processing tank formed of an acrylic plate, so that the processing tank was partitioned into four chambers. A 20 mm × 20 mm Pt mesh electrode (reference sign 41 in FIG. 8) was placed facing the anion exchange membrane in the acid recovery chamber (reference sign 11 in FIG. 8) demarcated by the anion exchange membrane. In addition, a 20 mm × 20 mm Pt mesh electrode (reference sign 44 in FIG. 8) was placed facing the cation exchange membrane in the alkali recovery chamber (reference sign 13 in FIG. 8) demarcated by the cation exchange membrane and the electrolyte membrane. In the Li recovery chamber (reference sign 14 in FIG. 8) demarcated by the electrolyte membrane and located on the first electrode side, a 20 mm × 20 mm Ni mesh electrode was placed as the sub-electrode (reference sign 47 in FIG. 8) facing the electrode on the surface of the electrolyte membrane (the distance between the sub-electrode and the electrolyte membrane: 50 mm). Then, the Li+ transfer power supply (reference sign 51 in FIG. 8) was connected between the first electrode and the second electrode with the second electrode set as a positive electrode, the sub-power supply (reference sign 54 in FIG. 8) was connected in series to the negative electrode of the first power supply, and the negative electrode of the sub-power supply was connected to the sub-electrode. In addition, the ion transfer power supply (reference sign 52 in FIG. 8) was connected between the Pt mesh electrode in the acid recovery chamber and the Pt mesh electrode in the alkali recovery chamber with the acid recovery chamber side set as a positive electrode, so that the lithium recovery device was fabricated. In addition, ammeters were inserted between the positive electrode of the Li+ transfer power supply and the second electrode, and between the negative electrode of the ion transfer power supply and the Pt mesh electrode in the alkali recovery chamber.

As the Li supply aqueous solution (Li source), two types of aqueous solutions different in pH were prepared which contained Li+ and other various ions as specified in Table 1. The neutral Li supply aqueous solution contained a large amount of nitric acid and did not contain Al3+ because Al3+ precipitates. As specified in Table 2, 150 ml of each of the Li supply aqueous solutions was put in the supply chamber of the lithium recovery device. Further, 2000 ml of the same Li supply aqueous solution was stored in a circulation tank of a circulation device for the Li supply aqueous solution installed outside the processing tank of the lithium recovery device. Moreover, as the Li recovery aqueous solution, a lithium hydroxide (LiOH) aqueous solution at 0.1 mol/L was prepared and 150 ml of the LiOH aqueous solution was put in the Li recovery chamber of the lithium recovery device so that the first electrode and the sub-electrode were immersed completely. In addition, 150 ml of pure water was put in both the acid recovery chamber and the alkali recovery chamber as the acid recovery aqueous solution and the alkali recovery aqueous solution so that the electrodes were completely immersed.

[Table 1]

| Li Supply Aqueous Solution | Main Cations | Main Anions | Li+ Concentration | pH | Remarks |
|---|---|---|---|---|---|
| (Alkaline) | Li+, Na+, K+, Mg2+, Al3+ | Cl-, F-, NO3-, SO42- | 0.2 mol/L | About 12 | |
| (Neutral) | Li+, Na+, K+, Mg2+ | Cl-, F-, NO3-, SO42- | 0.2 mol/L | About 7 | pH adjusted by HNO3 |

[Table 2]

| | Acid Recovery Chamber | Supply Chamber | Alkali Recovery Chamber | Li Recovery Chamber | V2 | V1 | V4 |
|---|---|---|---|---|---|---|---|
| Initial | Pure Water | Li Supply Aqueous Solution (Circulate) | Pure Water | 0.1 mol/L LiOH Aqueous Solution | 8V | - | - |
| After 48 hr | pH 1-2 (*) | | Li+ Concentration 1.0 mol/L, pH 11 | | 8V | 5V | 10V |
| *: pH 1.8-2.3 in the case of the alkaline Li supply aqueous solution / pH 1.1-1.4 in the case of the neutral Li supply aqueous solution | | | | | | | |

(Lithium Recovery Experiment)

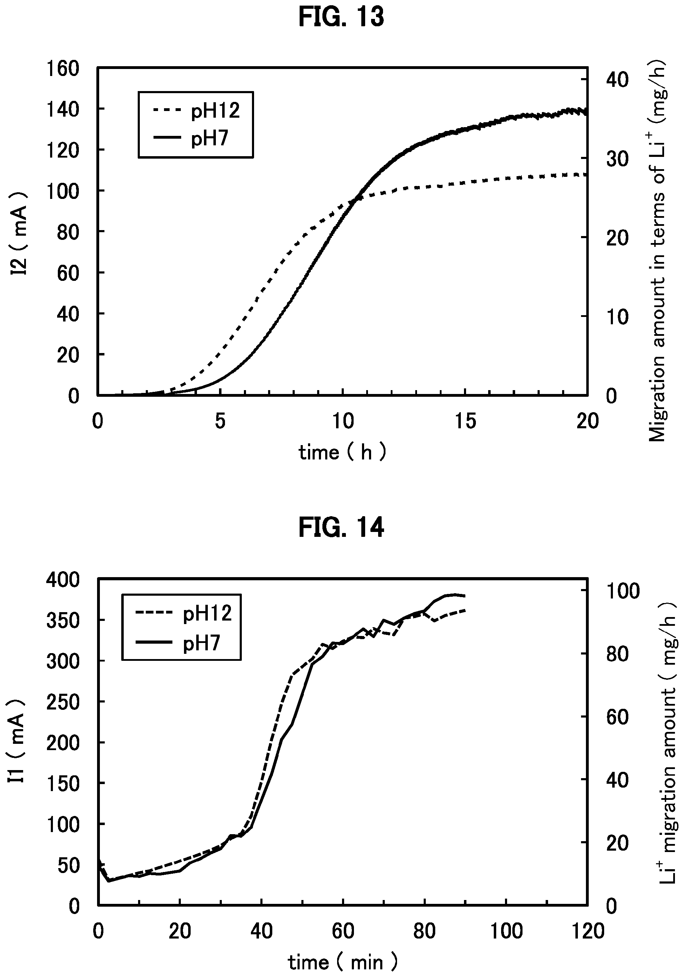

As Example according to the third embodiment of the present invention (see FIG. 9), first a direct-current voltage of 8 V (the voltage V2 in FIG. 9) was applied by the ion transfer power supply. While the voltage was being applied, the Li supply aqueous solution was replenished to the supply chamber from the replenishment tank at a constant rate by a liquid transfer pump and pumped out at the same rate in order to suppress a change in the ion concentration in the supply chamber along with electrodialysis. For each of the alkaline (pH 12) and neutral (pH 7) Li supply aqueous solutions, FIG. 13 shows a transition up to 20 hours of a current value (I2) measured by the ammeter connected to the ion transfer power supply and a migration amount per hour calculated from the current value on the assumption that all the migrated cations were Li$^+$. Then, after 48 hours from the start of the application of the voltage V2 by the ion transfer power supply, the applications of direct-current voltages (the voltages V1 and V4 in FIG. 9) of 5 V by the Li$^+$ transfer power supply and 10 V by the sub-power supply were started while the application of the voltage V2 was continued.

With the application of the voltage by the ion transfer power supply, the alkali recovery aqueous solution in the alkali recovery chamber was presumed to become an aqueous solution of hydroxides of monovalent metal ions (LiOH, NaOH, and KOH). After the voltage application for 48 hours, that is, at the start of the voltage application by the Li$^+$ transfer power supply and the sub-power supply, the alkali recovery aqueous solution had a Li$^+$ concentration of 1.0 mol/L and a pH of about 11. Meanwhile, it was confirmed that, after the voltage application for 48 hours, the acid recovery aqueous solution in the acid recovery chamber had become acid containing all the types of anions (see Table 1) that had been contained in the Li supply aqueous solution, and had a pH of 1.8 to 2.3 in the case of the alkaline Li supply aqueous solution and a pH of 1.1 to 1.4 in the case of the neutral Li supply aqueous solution. FIG. 14 shows a transition of a current value (I1) measured by the ammeter connected to the Li$^+$ transfer power supply and a migration amount per hour calculated with this current value converted to migrated Li$^+$. The Li$^+$ migration amount per hour was calculated in accordance with Current $\times$ Time $\times$ Li atomic weight/Faraday constant. The Li atomic weight was 6.941 g/mol and the Faraday constant was 96485 C/mol.

As Comparative Example, a processing tank formed of an acrylic plate was partitioned into two chambers by an electrolyte membrane on which the same first and second electrodes as in Example were formed. The second electrode side of the processing tank was used as the supply chamber and the first electrode side of the processing tank was used as the Li recovery chamber. The same sub-electrode as in Example was arranged in the Li recovery chamber, the Li$^+$ transfer power supply was connected between the first electrode and the second electrode with the second electrode set as the positive electrode, the sub-power supply was connected in series to the negative electrode of the first power supply, and the negative electrode of the sub-power supply was connected to the sub-electrode, so that the lithium recovery device was fabricated. In addition, an ammeter was inserted between the positive electrode of the Li$^+$ transfer power supply and the second electrode.

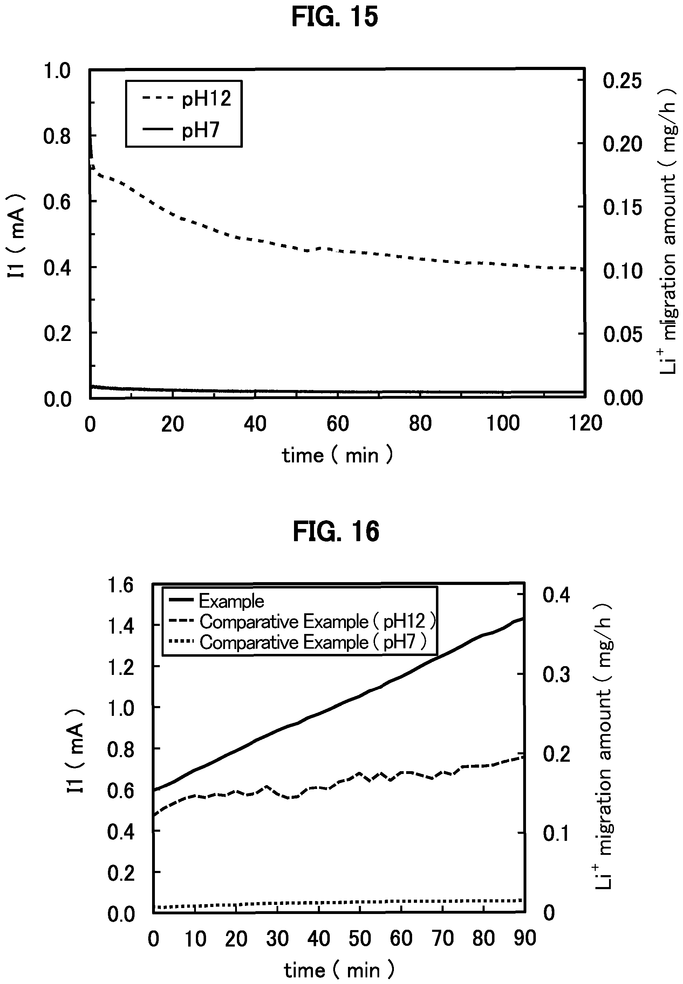

In the lithium recovery device in Comparative Example, the same Li supply aqueous solution and LiOH aqueous solution at 0.1 mol/L as in Example were put in the supply chamber and the Li recovery chamber, respectively. In the same manner as in Example, while the aqueous solution was being circulated in the supply chamber, the direct-current voltages of 5 V by the Li$^+$ transfer power supply and 10 V by the sub-power supply were applied. For each of the alkaline (pH 12) and neutral (pH 7) Li supply aqueous solutions, FIG. 15 shows a transition of the current value (I1) measured by the ammeter connected to the Li$^+$ transfer power supply and a migration amount per hour calculated with this current value converted to migrated Li$^+$.

As shown in FIG. 13, in both of the alkaline (pH 12) and neutral (pH 7) Li supply aqueous solutions, the cation migration amount per hour was small immediately after the start of the application of the voltage V2 by the ion transfer power supply, then was gradually increased, and was plateaued around the application time exceeding 10 to 12 hours. This is because the acid recovery chamber and the alkali recovery chamber stored the pure water at the start of the voltage application, and therefore had low electrical conductivity. Moreover, the cation migration amount (current) was larger in the case of the neutral Li supply aqueous solution. This is presumably because the alkaline Li supply aqueous solution contained fewer anions that permeated through the anion exchange membrane, resulting in a smaller current flow.

In the present example, after 48 hours at which it was presumed that a sufficient amount of cations including Li$^+$ in the Li supply aqueous solution migrated to the alkali recovery aqueous solution in the alkali recovery chamber, the Li$^+$ transfer power supply and the sub-power supply started applying the voltages V1 and V4. As shown in FIG. 14, about 40 minutes later after the start of the application of the voltages V1 and V4, the Li$^+$ mobility sharply increased and thereafter the high Li$^+$ mobility gently increased. This is presumably because the temperature was about 20°C before the start of the application of the voltages V1 and V4 and the temperature of the electrolyte membrane rose to about 40°C with the application of the voltage V1. In addition, almost no difference was observed between the cases of the alkaline and neutral Li supply aqueous solutions. In other words, it is presumed the alkali recovery aqueous solutions in contact with the supply side surface of the electrolyte membrane contained almost the same components. Therefore, even if the Li supply aqueous solution is non-alkaline, Li can be recovered at a high speed.

In Comparative Example in which the electrolyte using the electrolyte membrane was performed directly from the Li supply aqueous solution containing a large amount of anions as well as the cations other than Li$^+$, as shown in FIG. 15, the Li$^+$ mobility in the case of the alkaline Li supply aqueous solution was nearly four orders of magnitude lower than in Example, and further decreased with the passage of the application time. This is presumably because the anions in the Li supply aqueous solution were adsorbed to the surface of the electrolyte membrane positively charged by the application of the voltage V1 and blocked the Li$^+$ migration and the amount of the adsorbed anions increased with the passage of the application time to gradually lower the Li$^+$ mobility. Moreover, the Li$^+$ mobility in the case of the neutral Li supply aqueous solution was as low as about 1/20 of the Li$^+$ mobility in the case of the alkaline Li supply aqueous solution. In Comparative Example, the temperature of the electrolyte membrane remained nearly unchanged because the Li supply aqueous solution in contact with the supply side surface of the electrolyte membrane was circulated between the supply chamber and the external circulation tank.

[Experiment 2]

In the above-described lithium recovery experiment (Experiment 1), the Li$^+$ mobility in Example was significantly higher than in Comparative Example, presumably because the temperature of the electrolyte membrane in Example rose and became higher than in Comparative Example and also because the Li$^+$ concentration in the aqueous solution in contact with the supply side surface of the electrolyte membrane was higher. Therefore, to make a comparison by eliminating the differences in these influences, the following lithium recovery experiment was carried out.

The supply chamber in the lithium recovery device in Comparative Example used in Experiment 1 was used to imitate the alkali recovery chamber in Example. The aqueous solution that was recovered in the alkali recovery chamber in Example of Experiment 1 by putting the Li supply aqueous solution (alkaline) into the supply chamber, followed by the voltage application for 48 hours by the ion transfer power supply and that was then diluted with pure water so that the Li$^+$ concentration became 0.2 mol/L was used as an alkali recovery aqueous solution. This alkali recovery aqueous solution had a pH of about 12.

Into the supply chamber (alkali recovery chamber) of the lithium recovery device, 80 ml of the above-described alkali recovery aqueous solution was put so that the second electrode was completely immersed. In addition, as the Li recovery aqueous solution, 80 ml of the LiOH aqueous solution at 0.1 mol/L was put into the Li recovery chamber so that the first electrode and the sub-electrode were completely immersed. Then, thermometers were installed in the supply chamber and the Li recovery chamber, respectively. As in Comparative Example in Experiment 1, the direct-current voltages of 5 V by the Li$^+$ transfer power supply and 10 V by the sub-power supply were applied. FIG. 16 shows a transition of the current value (I1) measured by the ammeter connected to the Li$^+$ transfer power supply and a migration amount per hour calculated with this current value converted to migrated Li$^+$. FIG. 17 shows a transition of the temperature of the alkali recovery aqueous solution measured by the thermometer installed in the supply chamber.

As Comparative Example, 80 ml of the same Li supply aqueous solutions as in Experiment 1 specified in Table 1 was put into the supply chamber of the same lithium recovery device and 80 ml of the LiOH aqueous solution at 0.1 mol/L was put into the Li recovery chamber. As in Example described above, the direct-current voltages of 5 V by the Li$^+$ transfer power supply and 10 V by the sub-power supply were applied. For each of the alkaline (pH 12) and neutral (pH 7) Li supply aqueous solutions, FIG. 16 shows a transition of the current value (I1) measured by the ammeter connected to the Li$^+$ transfer power supply and a migration amount per hour calculated with this current value converted to migrated Li$^+$. FIG. 17 shows a transitions of the temperature of each of the Li supply aqueous solutions measured by the thermometer installed in the supply chamber.

As shown in FIG. 16, in Example, the Li$^+$ mobility increased approximately proportionally to the voltage application time. This change in the Li$^+$ mobility is presumably due to the increase in the temperature shown in FIG. 17. In contrast, in Comparative Example, in both cases of the alkaline and neutral Li supply aqueous solutions, the temperature was at the levels similar to that in Example, but the Li$^+$ mobility increased more gently than in the Example and remained nearly constant. In both of Example and Comparative Example, the temperature of the Li recovery aqueous solution was about 1 to 2°C higher than the supply side aqueous solution. In Comparative Example, the Li$^+$ mobility was higher in Experiment 1 (see FIG. 15) in the case of the alkaline Li supply aqueous solution up to about 20 minutes and in the case of the neutral Li supply aqueous solution up to about 5 minutes after the start of the voltage application, and then their relationship was reversed. This is presumably because in Experiment 1, the Li$^+$ concentration decreased gently because the Li supply aqueous solution was circulated with the outside. In addition, in Comparative Example using the alkaline Li supply aqueous solution, the difference in the Li$^+$ mobility from Example was small immediately after the start of the voltage application, but the difference widened over time because the Li$^+$ mobility did not increase so much even though the temperature increased.

From the above, it was confirmed that the lithium recovery device and the lithium recovery method according to the embodiment of the present invention can stably recover Li from a Li source containing a large amount of anions as well as cations other than Li$^+$ without being blocked by the anions, and can recover Li at a high speed even if the Li source is non-alkaline.

**Reference Signs List**

1, 1A to 1G lithium recovery device
11 acid recovery chamber
11a, 11b acid recovery chamber
12 supply chamber (lithium supply chamber)
13 alkali recovery chamber
13a primary alkali recovery chamber (alkali recovery chamber)
13b alkali recovery chamber
14 Li recovery chamber (lithium recovery chamber)
2 electrolyte membrane (lithium ion-conductive electrolyte membrane)
31, 32, 33, 34 ion exchange membrane
41, 42, 43, 44 electrode
45 electrode (second electrode)
46, 46A electrode (first electrode)
47 sub-electrode
51 power supply, Li$^+$ transfer power supply (first power supply)
52, 53 ion transfer power supply (power supply)
54 sub-power supply
7 processing tank
81, 82, 83, 84 circulation device (circulation unit)
S0 Li supply aqueous solution
S1 acid recovery aqueous solution
S2 alkali recovery aqueous solution
S3 Li recovery aqueous solution

**Claims**

1. A lithium recovery device comprising:

   a processing tank partitioned into four or more chambers including one or more acid recovery chambers, a lithium supply chamber, one or more alkali recovery chambers, and a lithium recovery chamber in this order;
   a lithium ion-conductive electrolyte membrane that partitions the processing tank into the lithium recovery chamber and its neighboring alkali recovery chamber;
   at least one ion exchange membrane that partitions the processing tank into the alkali recovery chamber and its neighboring alkali recovery chamber or the lithium supply chamber, and that conducts cations including at least lithium ions;
   at least one ion exchange membrane that partitions the processing tank into the acid recovery chamber and its neighboring acid recovery chamber or the lithium supply chamber and that has anion conductivity;
   electrodes provided respectively in at least the lithium recovery chamber and the acid recovery chamber located at an end opposite to the lithium recovery chamber in the processing tank; and
   one or more power supplies each connected between the electrodes with its lithium recovery chamber side set negative, wherein
   lithium ions contained in an aqueous solution stored in the lithium supply chamber are migrated to water or an electrolytic liquid stored in the lithium recovery chamber,
   each of the ion exchange membranes and the lithium ion-conductive electrolyte membrane is disposed between the electrodes connected to both poles of any one of the power supplies while none of the electrodes is disposed between the above electrodes.

2. The lithium recovery device according to claim 1, wherein

   the electrodes include a first electrode and a second electrode provided respectively in the lithium recovery chamber and its neighboring alkali recovery chamber so as to be in contact with or facing the lithium ion-conductive electrolyte membrane, and
   the power supplies include a first power supply connected between the first electrode and the second electrode with the first electrode in the lithium recovery chamber set negative.

3. The lithium recovery device according to claim 2, wherein at least one of the first electrode and the second electrode has a porous structure and is in contact with the lithium ion-conductive electrolyte membrane.

4. The lithium recovery device according to claim 3, wherein

the second electrode has a porous structure and is in contact with the lithium ion-conductive electrolyte membrane,

the power supplies further includes a second power supply connected to a positive electrode of the first power supply in series,

the electrodes further includes a third electrode connected to a positive electrode of the second power supply and provided in any one of the alkali recovery chambers in which the second electrode is not provided, the acid recovery chambers, and the lithium supply chamber.

5. The lithium recovery device according to claim 4, wherein
the third electrode is provided in the chamber neighboring to the alkali recovery chamber in which the second electrode is provided.

6. The lithium recovery device according to any one of claims 3 to 5, wherein

the first electrode and the second electrode have porous structures and are in contact with the lithium ion-conductive electrolyte membrane,

the lithium recovery device further comprises

a sub-electrode provided away from the lithium ion-conductive electrolyte membrane and the first electrode in the lithium recovery chamber, and

a sub-power supply connected between the first electrode and the sub-electrode with the first electrode set positive.

7. The lithium recovery device according to any one of claims 1 to 5, comprising:

one or more circulation tanks provided outside the processing tank; and

a circulation unit configured to circulate an aqueous solution stored in at least one of the acid recovery chambers, the lithium supply chamber, and the alkali recovery chambers with an aqueous solution stored in the corresponding one of the circulation tanks.

8. The lithium recovery device according to any one of claims 1 to 5, comprising:

an external lithium recovery tank provided outside the processing tank; and

a circulation unit configured to circulate a solution stored in the lithium recovery chamber with water or an electrolytic liquid stored in the external lithium recovery tank.

9. A lithium recovery method comprising, in a processing tank partitioned into four or more chambers including one or more acid recovery chambers, a lithium supply chamber, one or more alkali recovery chambers, and a lithium recovery chamber in this order, migrating lithium ions contained in an aqueous solution stored in the lithium supply chamber to water or an electrolytic liquid stored in the lithium recovery chamber, wherein

the lithium recovery chamber and its neighboring alkali recovery chamber are partitioned by a lithium ion-conductive electrolyte membrane,

the alkali recovery chamber and its neighboring alkali recovery chamber or the lithium supply chamber are partitioned by an ion exchange membrane that conducts cations including at least lithium ions,

the acid recovery chamber and its neighboring acid recovery chamber or the lithium supply chamber are partitioned by an ion exchange membrane having anion conductivity, and

one or more power supplies connected between electrodes provided in two or more of the acid recovery chambers, the lithium supply chamber, the alkali recovery chambers, and the lithium recovery chamber apply voltages for generating potential differences between both surfaces of the lithium ion-conductive electrolyte membrane and between both surfaces of each of the ion exchange membranes such that the surfaces on a lithium recovery chamber side have lower potentials, thereby migrating the lithium ions contained in the aqueous solution stored in the lithium supply chamber to the water or the electrolytic liquid stored in the lithium recovery chamber via water or an aqueous solution stored in the alkali recovery chambers.

10. The lithium recovery method according to claim 9, wherein the voltages are applied to migrate at least one kind of anions other than hydroxide ions contained in the aqueous solution stored in the lithium supply chamber to the water or the aqueous solution stored in the acid recovery chambers.

11. The lithium recovery method according to claim 10, wherein

the power supplies includes a first power supply connected between a first electrode and a second electrode provided in contact with or facing the lithium ion-conductive electrolyte membrane in the lithium recovery chamber and its neighboring alkali recovery chamber, respectively, and
the first power supply applies a voltage in which the first electrode on a lithium recovery chamber side is negative.

12. The lithium recovery method according to claim 11, wherein

the second electrode has a porous structure and is in contact with the lithium ion-conductive electrolyte membrane,
the power supplies further includes a second power supply connected to a positive electrode of the first power supply in series,
the electrodes further includes a third electrode connected to a positive electrode of the second power supply and provided in any one of the alkali recovery chambers in which the second electrode is not provided, the acid recovery chambers, and the lithium supply chamber.

13. The lithium recovery method according to claim 11 or 12, wherein

the first electrode and the second electrode have porous structures and are in contact with the lithium ion-conductive electrolyte membrane, and
a sub-power supply connected between the first electrode and a sub-electrode provided away from the lithium ion-conductive electrolyte membrane and the first electrode in the lithium recovery chamber applies a volage with the first electrode set positive.

14. The lithium recovery method according to claim 13, wherein
the power supply whose negative electrode is connected to the first electrode applies a voltage between both surfaces of the lithium ion-conductive electrolyte membrane, the voltage generating a potential difference equal to or greater than a voltage applied to the lithium ion-conductive electrolyte membrane to reach a reduction potential of at least one metal element contained in the lithium ion-conductive electrolyte membrane.

FIG. 1

# FIG. 2

# FIG. 3

EP 4 487 940 A1

FIG. 4

**FIG. 5**

EP 4 487 940 A1

**FIG. 6**

EP 4 487 940 A1

FIG. 7

**FIG. 8**

**FIG. 9**

## FIG. 10

EP 4 487 940 A1

# FIG. 11

EP 4 487 940 A1

**FIG. 12**

EP 4 487 940 A1

## FIG. 13

## FIG. 14

## FIG. 15

## FIG. 16

# FIG. 17

# FIG. 18

| INTERNATIONAL SEARCH REPORT | International application No. |
| | **PCT/JP2023/013395** |

**A. CLASSIFICATION OF SUBJECT MATTER**

***B01D 61/44***(2006.01)i; ***B01D 61/46***(2006.01)i; ***C01D 15/02***(2006.01)i; ***C22B 26/12***(2006.01)i; ***C22B 3/02***(2006.01)i; ***C22B 3/20***(2006.01)i; ***C25B 13/07***(2021.01)i; ***C25B 9/21***(2021.01)i; ***B09B 3/70***(2022.01)i; ***C25B 1/46***(2006.01)i; ***B09B 101/16***(2022.01)n; ***C02F 1/469***(2023.01)i

FI: B01D61/44 500; C22B3/02; C22B26/12; C22B3/20; B09B3/70; C25B9/21; C25B13/07; C02F1/469 ZAB; B01D61/46 500; B01D61/46 510; C01D15/02; C25B1/46; B09B101:16

According to International Patent Classification (IPC) or to both national classification and IPC

**B. FIELDS SEARCHED**

Minimum documentation searched (classification system followed by classification symbols)

B01D53/22; B01D61/00-71/82; C02F1/44; C02F1/46-1/48; C01D15/02; C22B1/00-61/00; C25B1/00-9/77; C25B13/00-15/08; B09B3/70; B09B101/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-141808 A (HIROSAKI UNIV.) 29 August 2019 (2019-08-29) claims, examples, drawings | 1-14 |
| A | JP 2014-173144 A (ASUTOMU KK) 22 September 2014 (2014-09-22) claims, examples, drawings | 1-14 |
| A | JP 2012-200666 A (DOWA ECO-SYSTEM CO., LTD.) 22 October 2012 (2012-10-22) claims, examples, drawings | 1-14 |
| A | JP 2012-234732 A (ASAHI KASEI CORP.) 29 November 2012 (2012-11-29) claims, examples, drawings | 1-14 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| **05 June 2023** | **20 June 2023** |

| Name and mailing address of the ISA/JP | Authorized officer |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/013395**

| Patent document cited in search report | | | Publication date (day/month/year) | Patent family member(s) | | | Publication date (day/month/year) |
|---|---|---|---|---|---|---|---|
| JP | 2019-141808 | A | 29 August 2019 | (Family: none) | | | |
| JP | 2014-173144 | A | 22 September 2014 | JP | 5367190 | B1 | |
| JP | 2012-200666 | A | 22 October 2012 | (Family: none) | | | |
| JP | 2012-234732 | A | 29 November 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6233877 B
- JP 2019081953 A
- JP 2019141807 A
- WO 2022239864 A
- WO 2023027190 A

**Non-patent literature cited in the description**

- **KUNUGI S.** ; **INAGUMA Y.** ; **ITOH M.** Electrochemical recovery and isotope separation of lithium ion employing lithium ion-conductive perovskite-type oxides. *Solid State Ionics*, July 1999, vol. 122 (1-4), 35-39